# EUROPEAN PATENT APPLICATION

(11) **EP 4 491 378 A1**
(43) Date of publication of application: **15.01.2025**
(21) Application number: 22930414.2
(22) Date of filing: 14.04.2022
(51) Int. Cl.: B29C 64/20, B29C 64/386, B29C 64/393, B29C 64/165, B22F 10/10, B22F 1/102, B33Y 10/00, B33Y 30/00, B33Y 50/00, B33Y 50/02

(54) **METHOD AND DEVICE FOR PRINTING THREE-DIMENSIONAL OBJECT, AND THREE-DIMENSIONAL PRINTING MATERIAL**

(30) Priority: 11.03.2022 CN 202210235881
(71) Applicant: ZHUHAI SAILNER 3D TECHNOLOGY CO., LTD., Zhuhai, Guangdong 519000 (CN)
(72) Inventor: LV, Rusong, Zhuhai, Guangdong 519000 (CN); HE, Xingbang, Zhuhai, Guangdong 519000 (CN); SHEN, Weizhen, Zhuhai, Guangdong 519000 (CN); YANG, Qiancheng, Zhuhai, Guangdong 519000 (CN); JIANG, Wei, Zhuhai, Guangdong 519000 (CN); HUANG, Yaying, Zhuhai, Guangdong 519000 (CN)
(74) Representative: Elzaburu S.L.P.
(86) International application number: PCT/CN2022/086826
(87) International publication number: WO 2023/168782

(57) **Abstract**

The present application provides a three-dimensional object printing method and device, and a three-dimensional printing material, where the printing method includes: forming a powder material layer by using a powder material, where the powder material layer includes a molding area and a non-molding area; spraying a first liquid material and a second liquid material at a first ratio in the molding area of the powder material layer according to layer printing data, where the second liquid material promotes a polymerization reaction of the first liquid material to form a layer solid portion of a three-dimensional object; and spraying the first liquid material and the second liquid material at a second ratio in the non-molding area of the powder material layer according to the layer printing data to form a layer protective portion of the three-dimensional object, where the first ratio is greater than the second ratio. Embodiments of the present application provide the three-dimensional object printing method and device, and the three-dimensional printing material, which can improve the storage stability of liquid materials and the surface accuracy of three-dimensional objects, and reduce the difficulty of post-processing.

## Description

This application claims priority to Chinese Patent Application No. 202210235881.X, entitled "Three-dimensional object printing method and device, and three-dimensional printing material", filed with the CNIPA on March 11, 2022, which is hereby incorporated by reference in its entirety.

### TECHNICAL FIELD

The present application relates to the technical field of three-dimensional printing and, in particular, to a three-dimensional object printing method and device, and a three-dimensional printing material.

### BACKGROUND

A main process of a three-dimensional object additive manufacturing technology includes: obtaining a digital model of a three-dimensional object, slicing and layering the digital model, and performing data processing and converting on each slice layer to obtain printing data of each slice layer, printing, by a printing device, layer-by-layer according to the printing data of each slice layer, and stacking slice layers to manufacture the three-dimensional object.

For a technology of combining powder with inkjet printing in the existing three-dimensional object additive manufacturing technology, for example, a printing head sprays a liquid material in molding areas of a powder material layer according to layer printing data of a three-dimensional object, then radiation is provided such that the liquid material occurs a polymerization reaction and then wraps powder particles which are in contact with the liquid material to form a layer of the three-dimensional object; or, the liquid material contains a radiation absorber, and the radiation absorber absorbs the radiation and converts the radiation into thermal energy, such that powder particles which are in contact with the liquid material are melted to form a layer of the three-dimensional object. However, this kind of three-dimensional object additive manufacturing technology has a problem that the sprayed liquid penetrates into non-molding areas, thereby causing powder particles in the non-molding areas to be adhered and wrapped to the surface of the three-dimensional object adjacent to the powder particles, or, causing powder particles in the non-molding areas to be melted and adhered to the surface of the three-dimensional object, eventually causing a high surface roughness of the final three-dimensional object and difficult post-processing.

Therefore, in the additive manufacturing technology of combining powder with inkjet printing, how to improve the surface accuracy of three-dimensional objects and reduce the difficulty of post-processing of three-dimensional objects is a technical problem to be solved by those skilled in the art.

### SUMMARY

Embodiments of the present application provide a three-dimensional object printing method and device, and a three-dimensional printing material, which can improve the storage stability of liquid materials, improve the surface accuracy of three-dimensional objects, and reduce the difficulty of post-processing.

In a first aspect, the present application provides a three-dimensional object printing method, including:
forming a powder material layer by using a powder material, where the powder material layer includes a molding area and a non-molding area;
applying a first liquid material and a second liquid material at a first ratio in the molding area of the powder material layer according to layer printing data, where the second liquid material promotes a polymerization reaction of the first liquid material to form a layer solid portion of a three-dimensional object; and
applying the first liquid material and the second liquid material at a second ratio in the non-molding area of the powder material layer according to the layer printing data to form a layer protective portion of the three-dimensional object, where the first ratio is greater than the second ratio; an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

In combination with the first aspect, in a feasible implementation, the first ratio is a volume ratio of the first liquid material to the second liquid material, and the first ratio is (1-10): 1; and/or the second ratio is a volume ratio of the first liquid material to the second liquid material, and the second ratio is (0-0.95): 1.

In combination with the first aspect, in a feasible implementation, the layer solid portion and the layer protective portion are located in a same horizontal plane, and the layer solid portion and the layer protective portion are disposed adjacent to each other.

In combination with the first aspect, in a feasible implementation, the amount of the second liquid material per unit volume of the non-molding area gradually decreases in a direction of the non-molding area away from the molding area.

In combination with the first aspect, in a feasible implementation, a width of the layer protective portion is greater than or equal to a minimum diameter of droplets of the applied liquid materials.

In combination with the first aspect, in a feasible implementation, before spraying the first liquid material and the second liquid material at the first ratio in the molding area of the powder material layer according to the layer printing data and spraying the first liquid material and the second liquid material at the second ratio in the non-molding area of the powder material layer according to the layer printing data, the three-dimensional object printing method further includes:
preheating the powder material layer.

In combination with the first aspect, in a feasible implementation, a temperature of the preheating is lower than a melting point or a melting temperature of the powder material by 5°C to 100°C.

In combination with the first aspect, in a feasible implementation, after applying the first liquid material and the second liquid material at the second ratio in the non-molding area of the powder material layer according to the layer printing data, the three-dimensional object printing method further includes:
heating the powder material layer to which the second liquid material is applied.

In combination with the first aspect, in a feasible implementation, a temperature of the heating is higher than 70°C and lower than a melting point or a melting temperature of the powder material by 5°C or more, so as to promote evaporation of water from the second liquid material, and/or to promote dissolution of the powder material by the first liquid material and to promote the polymerization reaction of the first liquid material.

In combination with the first aspect, in a feasible implementation, an energy for the preheating and the heating includes at least one of radiant energy and thermal energy.

In combination with the first aspect, in a feasible implementation, the first liquid material includes a first active component that dissolves at least a portion of the powder material; the second liquid material includes a second auxiliary agent, a powder release agent, a stripping agent, a hydrocarbon chain surfactant and water, and the second auxiliary agent is used for promoting the polymerization reaction of the first liquid material.

In combination with the first aspect, in a feasible implementation, based on a total weight of the second liquid material being 100%, the second liquid material includes the following components in percentage by weight: 0.1% to 40% of the second auxiliary agent, 30% to 90% of water, 0.01% to 10% of the powder release agent, 1% to 30% of the stripping agent, and 0.1% to 10% of the hydrocarbon chain surfactant.

In combination with the first aspect, in a feasible implementation, at least one of the following characteristics is satisfied:
(1) the second auxiliary agent is selected from at least one of an initiator, a pro-initiator and a catalyst;
(2) the powder release agent is selected from at least one of a silicon-containing water-soluble release agent, a silicon-containing water-dispersible release agent, a fluorine-containing water-soluble release agent and a fluorine-containing water-dispersible release agent;
(3) the powder release agent is selected from at least one of silicone oil emulsion, fluorine-containing nonionic surfactant and fluorine-containing anionic surfactant;
(4) the stripping agent is selected from a water-soluble polymer and/or a water-dispersible polymer having a glass transition temperature lower than 40°C;
(5) the stripping agent is selected from at least one of polyether resin, polyester resin, poly(methyl)acrylate resin and polyurethane resin with a glass transition temperature lower than 40°C.

In combination with the first aspect, in a feasible implementation, the second liquid material further includes the following components in percentage by weight: 0.05% to 30% of a co-solvent.

In combination with the first aspect, in a feasible implementation, the co-solvent is selected from at least one of alcohol, alcohol ether, amide, pyrrolidone, organic acid and organic salt.

In combination with the first aspect, in a feasible implementation, after forming the layer solid portion and the layer protective portion of the three-dimensional object, the method further includes:
repeatedly forming the powder material layer and applying the first liquid material and the second liquid material, so as to obtain a plurality of slice layers which are stacked layer-by-layer to form the three-dimensional object, where the slice layers include the layer solid portion and the layer protective portion.

According to a second aspect, an embodiment of the present application provides non-transitory computer-readable storage medium, including a stored program, and when the program is executed, a device in which the storage medium is located is controlled to implement the above three-dimensional object printing method.

In a third aspect, an embodiment of the present application provides a computer device, including a memory, a processor, and a computer program stored in the memory and executable on the processor, where the above three-dimensional object printing method is implemented when the processor executes the computer program.

According to a fourth aspect, an embodiment of the present application provides a three-dimensional object, which is obtained by printing using the above three-dimensional object printing method.

In a fifth aspect, an embodiment of the present application provides a three-dimensional printing material used with a powder material for three-dimensional printing, including:
a first liquid material, including a first active component, where the first active component dissolves at least a portion of the powder material;
a second liquid material, where based on a total weight of the second liquid material being 100%, the second liquid material includes the following components in percentage by weight: 0.1% to 40% of a second auxiliary agent, 30% to 90% of water, 0.01% to 10% of a powder release agent, 1% to 30% of a stripping agent, and 0.1% to 10% of a hydrocarbon chain surfactant; where the second auxiliary agent is used for promoting a polymerization reaction of the first liquid material.

In a sixth aspect, an embodiment of the present application provides a three-dimensional printing material, including:
a powder material, for forming a powder material layer;
a first liquid material, including a first active component, where the first active component dissolves at least a portion of the powder material;
a second liquid material, where based on a total weight of the second liquid material being 100%, the second liquid material includes the following components in percentage by weight: 0.1% to 40% of a second auxiliary agent, 30% to 90% of water, 0.01% to 10% of a powder release agent, 1% to 30% of a stripping agent, and 0.1% to 10% of a hydrocarbon chain surfactant; where the second liquid material is used for promoting a polymerization reaction of the first liquid material.

In combination with the sixth aspect, in a feasible implementation, the powder material layer includes a molding area and a non-molding area, the first liquid material and the second liquid material are applied to the molding area at a first ratio, the first liquid material and the second liquid material are applied to the non-molding area at a second ratio, and the first ratio is greater than the second ratio.

In combination with the sixth aspect, in a feasible implementation, the first ratio is a volume ratio of the first liquid material to the second liquid material, and the first ratio is (1-10): 1; and/or the second ratio is a volume ratio of the first liquid material to the second liquid material, and the second ratio is (0-0.95): 1.

In combination with the sixth aspect, in a feasible implementation, an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

In combination with the sixth aspect, in a feasible implementation, the powder material includes at least one of polystyrene, polyvinyl chloride, polyacrylonitrile, acrylonitrile-styrene-acrylate copolymer, polyamide, polyester, polyurethane, poly(meth)acrylate, polyvinyl fluoride, chlorinated polyolefin, containing block and/or graft copolymer soluble by the first active component,polyvinyl alcohol containing hydroxyl group, cellulose, and modified cellulose.

In combination with the fifth or sixth aspect, in a feasible implementation, the first active component has an active group capable of participating in the polymerization reaction, and the active group includes at least one of a carbon-carbon double bond, a hydroxyl group, a carboxyl group, a heterocyclic propane group, a carbonate group, an epoxy group, a liquid cyclic lactone structure, and a cyclic acetal structure.

In combination with the fifth or sixth aspect, in a feasible implementation, the first liquid material includes a second active component having an active group capable of participating in the polymerization reaction, and the second active component does not dissolve the powder material;
the second active component includes at least one of isobornyl acrylate, isobornyl methacrylate, lauryl acrylate, lauryl methacrylate, cyclotrimethylolpropane methylal acrylate, a prepolymer containing a carbon-carbon double bond, a prepolymer containing an epoxy group, a monomer promoting ring-opening polymerization reaction of an epoxy group, a prepolymer promoting ring-opening polymerization reaction of an epoxy group, a solid cyclic lactone, and a cyclic amide compound.

In combination with the fifth or sixth aspect, in a feasible implementation, based on a total weight of the first liquid material being 100%, a weight ratio of the first active component in the first liquid material is 10% to 95%.

In combination with the fifth or sixth aspect, in a feasible implementation, based on a total weight of the first liquid material being 100%, a weight ratio of the second active component in the first liquid material is 5% to 90%.

In combination with the fifth or sixth aspect, in a feasible implementation, based on a total weight of the first liquid material being 100%, the first liquid material further includes the following components in percentage by weight: 0.01% to 30% of a first auxiliary agent; and
the first auxiliary agent includes at least one of a high-temperature initiator, a flatting agent, a defoamer, a polymerization inhibitor, an antioxidant, a plasticizer, a dispersant, a pigment, and a dye.

In combination with the fifth or sixth aspect, in a feasible implementation, at least one of the following characteristics is satisfied:
(1) the second auxiliary agent is selected from at least one of an initiator, a pro-initiator and a catalyst;
(2) the powder release agent is selected from at least one of a silicon-containing water-soluble release agent, a silicon-containing water-dispersible release agent, a fluorine-containing water-soluble release agent and a fluorine-containing water-dispersible release agent;
(3) the powder release agent is selected from at least one of silicone oil emulsion, fluorine-containing nonionic surfactant and fluorine-containing anionic surfactant;
(4) the stripping agent is selected from a water-soluble polymer and/or a water-dispersible polymer having a glass transition temperature lower than 40°C;
(5) the stripping agent is selected from at least one of polyether resin, polyester resin, poly(methyl)acrylate resin and polyurethane resin with a glass transition temperature lower than 40°C.

In combination with the fifth or sixth aspect, in a feasible implementation, based on a total weight of the second liquid material being 100%, the second liquid material further includes the following components in percentage by weight: 0.05% to 30% of a co-solvent.

In combination with the fifth or sixth aspect, in a feasible implementation, the co-solvent is selected from at least one of alcohol, alcohol ether, amide, pyrrolidone, organic acid and organic salt.

In combination with the fifth or sixth aspect, in a feasible implementation, the hydrocarbon chain surfactant is selected from one or more of fatty alcohol polyoxyethylene ether, sodium alkyl sulfonate, sodium alkyl benzene sulfonate, sodium alkyl sulfate, sodium alkyl succinate sulfonate, sodium sulfamate, polyether, and polyoxyethylene polyoxypropylene ether block copolymer.

According to a seventh aspect, an embodiment of the present application provides a three-dimensional object printing device, including:
a powder supply component, configured to supply a powder material to form a powder material layer, where the powder material layer includes a molding area and a non-molding area;
a molding platform, configured to support the powder material layer;
a printing head and a controller, where the controller controls the printing head to apply a first liquid material and a second liquid material at a first ratio in the molding area of the powder material layer according to a layer printing data, and the second liquid material promotes a polymerization reaction of the first liquid material to form a layer solid portion of a three-dimensional object;
where the controller controls the printing head to apply the first liquid material and the second liquid material at a second ratio in the non-molding area of the powder material layer according to the layer printing data to form a layer protective portion of the three-dimensional object; the first ratio is greater than the second ratio; an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

In combination with the seventh aspect, in a feasible implementation, the printing head includes a first nozzle array and a second nozzle array, where the first nozzle array is configured to spray the first liquid material and the second liquid material at the first ratio, and the second nozzle array is configured to spray the first liquid material and the second liquid material at the second ratio.

In combination with the seventh aspect, in a feasible implementation, the printing head includes a first nozzle array and a second nozzle array, where the first nozzle array and the second nozzle array are configured to respectively spray the first liquid material and the second liquid material at the first ratio in the molding area, and to respectively spray the first liquid material and the second liquid material at the second ratio in the non-molding area.

In combination with the seventh aspect, in a feasible implementation, the three-dimensional object printing device further includes a lifting mechanism, where the lifting mechanism drives the molding platform to move downwards by a distance of a powder layer thickness after each slice layer containing the solid layer part and the protective layer of the three-dimensional object is formed.

In combination with the seventh aspect, in a feasible implementation, the three-dimensional printing device further includes a preheating component, where the preheating component is disposed above the molding platform and is configured to preheat the powder material layer.

In combination with the seventh aspect, in a feasible implementation, the three-dimensional printing device further includes a heating component, where the heating component is disposed above the molding platform, and is configured to heat the powder material layer on which the second liquid material is sprayed.

The technical solutions of the present application have at least the following beneficial effects.

According to the three-dimensional object printing method provided in the present application, the first liquid material and the second liquid material are separately stored and applied to the molding area and the non-molding area of the powder material layer at different preparation ratios. Therefore, it is not only conducive to the improvement of the storage stability and the inkjet printing smoothness of the liquid material, but also conducive to the reduction of the temperature of the non-molding area, the reduction of the effect of the first liquid material on the powder material in the non-molding area, and the reduction of the difficulty of post-processing of the printed three-dimensional objects, especially the difficulty of the post-processing of the surface of the three-dimensional objects, thereby improving the surface precision of the printed obj ects.

According to the three-dimensional printing material provided in the present application, the first liquid material and the second liquid material are different liquid materials. The second liquid material contains the component for promoting the polymerization reaction of the first liquid material. The first liquid material and the second liquid material are stored separately, which is conducive to the improvement of the storage stability and the inkjet printing smoothness of the liquid materials.

The second liquid material contains water, and water is evaporated when energy is supplied to the powder material layer to which the second liquid material is applied, thereby improving the concentration of the second auxiliary agent and thus improving the polymerization reaction speed of the first active component. When a sufficient amount of water is evaporated, the temperature of the powder material in the non-molding area can be taken away, thereby preventing the powder material in the non-molding area from being melted and/or adhered. The use of water is less costly and more environmentally friendly than the use of other volatile solvents. The second liquid material contains the powder release agent, and when the volume of the second liquid material per unit volume of the molding area of the powder material layer on which the second liquid material is sprayed is less than the volume of the second liquid material per unit volume of the non-molding area of the powder material layer, it is conducive to the improvement of the surface precision of edges of the molding area. The second liquid material contains the stripping agent, when the second liquid material is sprayed on the non-molding area of the powder material layer, the stripping agent bonds the powder in the non-molding area at the edges of the molding area together, which facilitates the stripping of the powder in the non-molding area and the separation of the bonded powder from other powder in the non-molding area during powder recovery. The formulation of the second liquid material is not only conducive to the reduction of the difficulty of post-processing of the printed three-dimensional objects and thus conducive to the improvement of the surface precision of the printed objects, but also conducive to the powder recovery in the non-molding area.

### BRIEF DESCRIPTION OF DRAWINGS

In order to explain the technical solutions in embodiments of the present application more clearly, the following will make a brief introduction to the drawings used in the description of the embodiments. Apparently, the drawings in the following description are merely some embodiments of the present application. For persons of ordinary skil1 in the art, it is also possible to obtain other drawings from these drawings without creative effort.
FIG. 1 is a schematic flow chart of a three-dimensional object printing method according to an embodiment of the present application.
FIG. 2 is a schematic flow chart of a three-dimensional object printing method according to another embodiment of the present application.
FIG. 3a is a schematic structural diagram of a three-dimensional object to be printed according to an embodiment of the present application.
FIG. 3b is a schematic structural diagram of a powder material layer according to an embodiment of the present application.
FIGS. 4a to 4e are schematic structural diagrams showing falling points of ink droplets when a first liquid material and a second liquid material are sprayed at a specified ratio according to an embodiment of the present application.
FIG. 5 is a schematic flow chart of a three-dimensional object printing method according to yet another embodiment of the present application.
FIG. 6 is a schematic structural diagram of a three-dimensional object printing device according to an embodiment of the present application.
FIGS. 7a to 7c are schematic diagrams of a partial structure of a liquid supply device in a three-dimensional object printing device according to an embodiment of the present application.
FIGS. 8a to 8c are schematic diagrams of a surface structure of a nozzle of a printing head in a three-dimensional object printing device according to an embodiment of the present application.
FIG. 9 is a schematic diagram of a non-transitory computer-readable storage medium according to an embodiment of the present application.
FIG. 10 is a schematic structural diagram of a computer device according to an embodiment of the present application.

### DESCRIPTION OF EMBODIMENTS

In order to better understand the technical solutions of the present application, the embodiments of the present application are described in detail below with reference to the drawings.

It should be clear that the described embodiments are merely part rather than all of embodiments of the present application. All other embodiments obtained by persons of ordinary skill in the art based on the embodiments of the present application without creative effort shall fall within the protection scope of the present application.

Terms used in the embodiments of the present application are only for the purpose of describing specific embodiments, and are not intended to limit the present application. The singular forms of "a", "said" and "the" used in the embodiments of the present application and the appended claims are also intended to include plural form, unless the context clearly indicates other meanings.

It should be understood that the term "and/or" used herein is merely a description of association relationship of associated objects, indicating that three relationships may exist, for example, A and/or B, which can indicate the following three cases: A exists alone, both A and B exist, and B exists alone. In addition, the character "/" in the context generally indicates that the associated objects before and after it are in a relationship of "or". "Spraying" and "applying" herein have the same meaning, and both mean that a liquid material in a material storage container is ejected out through a nozzle of a printing head.

The present application relates to the additive manufacturing technology of combining powder material with inkjet printing, and relates to a three-dimensional object printing method, materials required for printing a three-dimensional object, a printed three-dimensional object, a computer readable storage medium for storing program instructions, a computer device, and a device for printing a three-dimensional object according to the three-dimensional object printing method of the present application, which can improve the surface accuracy of three-dimensional objects and reduce the difficulty of post-processing.

In one aspect, an embodiment of the present application provides a three-dimensional printing material, including:
a powder material for forming a powder material layer;
a first liquid material, including a first active component, where the first active component dissolves at least a portion of the powder material; and
a second liquid material, where based on a total weight of the second liquid material being 100%, the second liquid material includes the following components in percentage by weight: 0.1% to 40% of a second auxiliary agent, 30% to 90% of water, 0.01% to 10% of a powder release agent, 1% to 30% of a stripping agent, and 0.1% to 10% of a hydrocarbon chain surfactant; where the second auxiliary agent is used for promoting a polymerization reaction of the first liquid material.

According to the three-dimensional printing material provided in the present application, the powder material layer formed by the powder material includes a molding area and a non-molding area. The first liquid material and the second liquid material are different liquid materials. The second liquid material contains the second auxiliary agent for promoting the polymerization reaction of the first liquid material. Specifically, the second auxiliary agent promotes the polymerization reaction of the first active component in the first liquid material to form a solid portion of the three-dimensional object. The first liquid material and the second liquid material are stored separately, which is conducive to the improvement of the storage stability and the inkjet printing smoothness of the liquid materials.

The second liquid material contains water, and water is evaporated when energy is supplied to the powder material layer to which the second liquid material is applied, thereby improving a concentration of the second auxiliary agent in the second liquid material. Therefore, the polymerization reaction speed of the first active component is improved by the high concentration of the second auxiliary agent in the powder material layer. When a sufficient amount of water is evaporated, a temperature of the powder material in the non-molding area of the powder material layer can be taken away, thereby preventing the powder material in the non-molding area from being melted and/or adhered. The use of water is less costly and more environmentally friendly than the use of other volatile solvents. The second liquid material further contains the powder release agent, which is conducive to the improvement of the surface precision of edges of the molding area. The second liquid material further contains the stripping agent, which is conducive to the stripping of the powder material in the non-molding area from the solid portion formed by the molding area, and is conducive to the separation of the recovered powder from other powder in the non-molding area. The formulation of the second liquid material is not only conducive to the reduction of the difficulty of post-processing of the printed three-dimensional objects and further conducive to the improvement of the surface precision of the printed objects, but also conducive to the powder recovery in the non-molding area.

In some embodiments, the liquid material may be separately configured as a three-dimensional printing material, and then combined with a suitable powder material for use when printing. In other embodiments, the liquid material may be combined with the powder material to be used as a three-dimensional printing material so that the user can directly use it to print a three-dimensional object.

In some embodiments, the powder material is particles of material in powder form, which may be a metallic powder material or a non-metallic powder material.

The non-metallic powder material is selected from an organic polymer powder material. The organic polymer powder material does not polymerize with either the first liquid material or the second liquid material. The second liquid material promotes the polymerization reaction of the first liquid material when the second liquid material is in contact with the first liquid material at a specific ratio and under suitable temperature conditions. Polymers formed by the polymerization reaction have different strengths according to different ratios between the first liquid material and the second liquid material, so that the strength of the solid portion (corresponding to the molding area) and the strength of the protective portion (corresponding to the non-molding area) of the printed three-dimensional object are different.

In some embodiments, the organic polymer powder material may be selected from polypropylene. In actual practice, polypropylene cannot be dissolved by the first liquid material.

In some embodiments, the organic polymer powder material may be selected from at least one of polystyrene (PS), polyvinyl chloride (PVC), polyacrylonitrile (PAN), acrylonitrile-styrene-acrylate copolymer (ASA), polyamide (PA), polyester, polyurethane (PU), poly(meth)acrylate, polyvinyl fluoride, chlorinated polyolefin, containing block and/or graft copolymer soluble by the first active component, polyvinyl alcohol (PVA) containing hydroxyl group, cellulose, and modified cellulose. In actual practice, these organic polymer powder materials can be dissolved by the first liquid material.

In some embodiments, the powder material may further include an additive including at least one of a flowing auxiliary agent and a filler. The flowing auxiliary agent is used to improve the fluidity of the powder material, and may be, for example, silica, talcum powder, etc.; the filler is used to improve the mechanical strength of the three-dimensional object, and the filler may be, for example, graphene, carbon nanotube, carbon fiber, glass microsphere, glass fiber, kaolin, etc., and is not limited in this embodiment.

In each embodiment of the present application, the melting point or the melting temperature of the organic polymer powder material may be 60°C to 300°C, specifically, 60°C, 70°C, 80°C, 100°C, 120°C, 150°C, 180°C, 200°C, 240°C, 280°C, or 300°C, or may be other values within the above range, which is not limited herein.

In each embodiment of the present application, the particle shape and the particle size of the powder material are not particularly limited. Optionally, the powder material may be spherical, dendritic, flaky, disk-shaped, needle-shaped, rod-shaped and other shapes. An average particle size of the powder material is 1 µm to 400 µm, such as 1 µm, 5 µm, 10 µm, 30 µm, 50 µm, 100 µm, 150 µm, 200 µm, 250 µm, 300 µm, 350 µm or 400 µm, and the average particle size of the powder material is preferably 30 µm to 200 µm. Gaps between particles in the powder material are about 5 nm to 100 µm, such as 5 nm, 10 nm, 100 nm, 250 nm, 500 nm, 1 µm, 5 µm, 10 µm, 25 µm, 50 µm, 75 µm or 100 µm, which is not limited herein. Gaps between particles of the powder material in each embodiment of the present application are in the range of 5 nm to 100 µm, which is beneficial for the liquid material to quickly penetrate into the interior of the powder material layer through gaps and partially remain on the surface of the layer, even to wet the surface of the powder material in a selected area and at least partially dissolve the powder material. It should be noted that dissolution in each embodiment of the present application refers to all possible situations except complete insolubility.

In each embodiment of the present application, the first active component may merely contain one substance that is able to dissolve the powder material, or a mixture of a plurality of substances that are able to dissolve the powder material, and the solubility of the plurality of substances to the powder material may be different or the same.

It should be noted that the dissolution in this embodiment refers to all possible situations except complete insolubility. For example, when 1 g of a powder material is placed in 100 g of an active component, at most 1% of the powder material is dissolved. Preferably, the first active component completely dissolves the powder material. The dissolution of the powder material by the active component is not limited to be achieved at a normal temperature, and can also be achieved under the situation of heating and/or stirring. The dissolution is not limited to dissolution performed in one time, but also can include dissolution performed in multiple times and in stages. For example, if a slow dissolution occurs when the active component is in contact with the powder material, the powder material can be heated to speed up the dissolution rate. Preferably, the first active component completely dissolves the powder material which is in contact with the first active component.

In this specific embodiment, based on a total weight of the liquid material being 100%, the weight ratio of the first active component in the first liquid material is 10% to 95%. For example, it may be 10%, 20%, 30%, 40%, 50%, 60%, 70%, 80% or 95%. Of course, its weight ratio may also be formulated according to actual application, and is not limited here. Preferably, the weight ratio of the first active component in the liquid material is 30% to 95%. In this embodiment, the weight ratio of the first active component in the first liquid material is greater than or equal to 30%. By increasing the weight ratio of the first active component in the first liquid material, the dissolution rate and dissolution degree of the first active component to the powder material can be improved, thereby improving the mechanical strength of the printed objects.

Specifically, the first active component has an active group that can participate in the polymerization reaction, and the active group includes at least one of carbon-carbon double bond, hydroxyl group, carboxyl group, thiacyclopropane group, carbonate group, epoxy group, liquid cyclic lactone structure, and cyclic acetal structure. It should be noted that the first active component does not polymerize with the powder material.

The first active component may be selected from at least one of a monomer containing a carbon-carbon double bond, a composition of a substance containing an epoxy group and a substance promoting ring-opening polymerization reaction of an epoxy group, a cyclic lactone, a sulfur heterocyclic compound, a carbonate compound and a cyclic amide compound.

Specifically, the monomer containing a carbon-carbon double bond may be (meth)acrylates, vinyl ethers, allyl ethers, styrene, acryloyl morpholine, N-vinyl pyrrolidone, etc.

The composition of a substance containing an epoxy group and a substance promoting ring-opening polymerization reaction of an epoxy group may be a composition containing an epoxy diluent and/or a small molecule or prepolymer containing a hydroxyl group, a composition of an epoxy diluent and/or a small molecule or prepolymer containing a carboxyl group; the cyclic lactone may be γ-butyrolactone, δ-valerolactone, ε-caprolactone, etc.

The sulfur heterocycle compound may be such as thiacyclopropane, thiacyclobutane, etc.

The carbonic ester compound may be dimethyl carbonate, diethyl carbonate, etc.

The cyclic amide compound may be caprolactam, etc.

Exemplarily, the first active component may be styrene or γ-butyrolactone, and the powder material may be polystyrene that can be dissolved by styrene or γ-butyrolactone.

The first active component may also be a (meth)acrylate monomer, and the powder material may be poly(meth)acrylate, cellulose, modified cellulose, polyvinyl alcohol containing hydroxyl, polyester, polyurethane, modified polyamide, etc., which can be dissolved by the (meth)acrylate monomer.

The first active component may also be acryloyl morpholine, and the powder material may be polyurethane, cellulose, modified cellulose, polyvinyl alcohol containing a hydroxyl group, etc., which can be partially dissolved by acryloyl morpholine.

The first active component may also be epichlorohydrin, epoxy diluent and hydroxyethyl acrylamide, and the powder material may also be polycarbonate, polyamide, modified polyamide, cellulose ester, cellulose ether, etc., which can be dissolved by epichlorohydrin, epoxy diluent or hydroxyethyl acrylamide.

The first active component may be γ-butyrolactone, and the powder material may also be polyacrylonitrile, acetate fiber, polymethyl methacrylate, polyvinyl fluoride, polystyrene, etc., which can be dissolved by γ-butyrolactone.

The first active component may also be ε-caprolactone, and the powder material may also be chlorinated polyolefin, polyurethane, etc., which can be dissolved by ε-caprolactone.

Further, the first liquid material may further include a second active component having an active group. The second active component does not dissolve the powder material. That is, the second active component does not dissolve the powder material at all. Optionally, the second active component itself may be polymerized, or may participate in the polymerization reaction together with the first active component.

In this embodiment, based on a total weight of the first liquid material being 100%, a weight ratio of the second active component in the first liquid material is 5% to 90%. For example, it may be 5%, 10%, 20%, 30%, 40%, 50%, 60%, 70%, 80% or 90%. Of course, its weight ratio may also be formulated according to actual application, and is not limited here. Preferably, the weight ratio of the second active component in the first liquid material is 20% to 70%. By controlling the weight ratio of the second active component in the first liquid material, on the premise of ensuring that the first active component dissolves the powder material, the second active component is in property complementation with the first active component, so that the three-dimensional object has better properties, such as reduced shrinkage, than the case when it only contains the first active component.

It should be noted that, in a three-dimensional object printing process, the second active component may be filled into gaps between particles of the powder material or inside the powder particles, reducing the porosity of the molded object and improving the molding density of the object. Further, the second active component may also be in property complementation with the first active component, so that the three-dimensional object has better properties than the case when it only contains the first active component.

The second active component includes at least one of isobornyl acrylate, isobornyl methacrylate, lauryl acrylate, lauryl methacrylate, caprolactone acrylate, cyclotrimethylolpropane methylal acrylate, a prepolymer containing a carbon-carbon double bond, a prepolymer containing an epoxy group, a monomer promoting ring-opening polymerization reaction of an epoxy group, a prepolymer promoting ring-opening polymerization reaction of an epoxy group, a solid cyclic lactone, and a cyclic amide compound.

Exemplarily, the prepolymer containing a carbon-carbon double bond may be an epoxy or (modified) acrylate prepolymer, a polyester acrylate prepolymer, a polyurethane acrylate prepolymer, a pure acrylate prepolymer, etc. The prepolymer containing an epoxy group may be, for example, epoxy resin E-51, epoxy resin E-41, etc. The cyclic lactone may be lactide, glycolide, etc.; and the cyclic lactone itself is solid and has poor solubility. Some of the compounds containing a cyclic acetal structure, for example, trioxymethylene, themselves are solid. The (meth)acrylate monomers have different solubility to polymers due to their different structures, for example, isobornyl acrylate, isobornyl methacrylate, lauryl acrylate, lauryl methacrylate and cyclotrimethylolpropane methylal acrylate, which have poor solubility to polyurethane powders and basically cannot dissolve polyurethane powders.

Further, the first liquid material further includes a first auxiliary agent, and the first auxiliary agent includes at least one of a high-temperature initiator, a flatting agent, a defoamer, a polymerization inhibitor, an antioxidant, a plasticizer, a dispersant and a coloring agent. Specifically, based on a total weight of the first liquid material being 100%, a weight ratio of the first auxiliary agent in the liquid material is 0.1% to 30%, such as 0.1%, 1%, 5%, 10%, 15%, 19.5%, 24.5%, 27%, or 30%. Of course, its weight ratio may also be formulated according to the actual usage, and is not limited here.

Exemplarily, a weight ratio of the high-temperature initiator in the first liquid material is 0% to 10%, specifically 0%, 0.1%, 1%, 3.4%, 5.7%, 6.0%, 7.5%, 8.5%, 9.7%, or 10%. A weight ratio of the flatting agent in the first liquid material is 0.01% to 3%, specifically 0.01%, 0.05%, 0.1%, 0.5%, 1.2%, 1.8%, 2.1%, 2.5%, 2.7%, or 3%. A weight ratio of the defoamer in the first liquid material is 0.01% to 3%, specifically 0.01%, 0.05%, 0.1%, 0.5%, 1.2%, 1.8%, 2.1%, 2.5%, 2.7%, or 3%. A weight ratio of the polymerization inhibitor in the first liquid material is 0.05% to 3%, specifically 0.05%, 0.1%, 0.5%, 1.2%, 1.8%, 2.1%, 2.5%, 2.7%, or 3%. A weight ratio of the antioxidant in the first liquid material is 0.05-3%, specifically 0.05%, 0.1%, 0.5%, 1.2%, 1.8%, 2.1%, 2.5%, 2.7%, or 3%. A weight ratio of the plasticizer in the first liquid material is 0% to 25%, specifically 0%, 1%, 5%, 10%, 15%, 17.5%, 20%, or 25%. A weight ratio of the dispersant in first liquid material is 0% to 5%, specifically 0%, 0.1%, 1%, 1.4%, 1.7%, 2.0%, 2.5%, 3.5%, 4.2%, or 5%. A weight ratio of a pigment or a dye in first liquid material is 0% to 10%, specifically 0%, 0.1%, 1%, 2%, 4%, 5%, 6%, 7%, 9%, or 10%. Of course, their weight ratios may also be formulated according to the actual usage, and are not limited here.

It should be noted that the high-temperature initiator does not significantly initiate the active component (such as the first active component or the first active component and the second active component) in the first liquid material at room temperature, so the first liquid material containing the high-temperature initiator is relatively stable at room temperature and can be stored for three to six months, or even longer. In the present application, the high-temperature initiator is preferably defined as an initiator with a one-hour half-life greater than 120° C. The high temperature initiator has a good initiation effect only in high-temperature environment. However, the tolerance temperature of some polymer powder materials is often lower than the decomposition temperature of the high temperature initiator, and thus a pro-initiator is needed to induce the initiation effect of the high-temperature initiator to occur at a lower temperature.

Specifically, the high temperature initiator may be selected from at least one of tert-amyl acetate peroxide, tert-amyl benzoate peroxide, tert-butyl 3,5,5-trimethylhexanoate peroxide, tert-butyl benzoate peroxide, ethyl 3,3-dibutyrate, ethyl 3,3-bis (tert-butylperoxy) butanoate, ethyl 3,3-bis (tert-amylperoxy) butanoate, dicumyl peroxide, di-tert-pentyl peroxide, di-tert-butyl peroxide, tert-pentyl peroxide, tert-butyl peroxide, cumyl hydroperoxide, etc.

The function of the flatting agent is to improve the fluidity of the first liquid material and the wettability on the powder material, and at the same time, to adjust the surface tension of the first liquid material so that the liquid material can be printed normally. In the present application, as long as the flatting agent used can meet the above performance requirements, the choice of a specific flatting agent is not limited, for example, the flatting agent may be BYK333, BYK377, BYK1798, BYK-UV3530, BYK-UV3575, BYK-UV3535, etc., from BYK Co., Ltd., TEGO wet 500, TEGO wet 270, TEGO Glide450, TEGO RAD 2010, TEGO RAD 2011, TEGO RAD 2100, TEGO RAD 2200, etc., from TEGO Co., Ltd.

The function of the defoamer is to inhibit, reduce or eliminate bubbles in the liquid material. In the present application, as long as the defoamer used can achieve the above effects, there is no restriction on which defoamer to choose, for example, it can be BYK055, BYK088, BYK020, BYK025, etc., from BYK Co., Ltd.; TEGO Airex 920, TEGO Airex 921, TEGO Airex 986, TEGO Foamex 810, TEGO Foamex N, etc., from TEGO Co., Ltd.; and Efka 7081, Efka7082 etc., from Efka Co., Ltd.

The function of the polymerization inhibitor may be to improve the stability of the active component in the first liquid material at a high temperature, and may be to prevent the polymerization reaction of the active component in non-printing state and improve the storage stability of the liquid material. For example, the polymerization inhibitor may be hydroquinone, p-hydroxyanisole, p-benzoquinone, 2-tert-butylhydroquinone, phenothiazine, etc., or may be GENORAD*16, GENORAD*18, GENORAD*20, GENORAD*22, etc., from Rahn, Tinuvin234, Tinuvin770, Irganox245, Cytec S100, Cytec130, etc., from BASF, and Irgastab UV10, Irgastab UV 22, etc., from Cibay.

The function of the antioxidant is mainly to delay or inhibit the oxidation of the polymer, and for example, the antioxidant may be 2,6-di-tert-butyl-4-methylphenol, β-tetra[3-(3,5-di-tert-butyl-4-hydroxyphenyl)propionic acid] pentaerythritol ester, β-(3,5-di-tert-butyl-4-hydroxyphenyl)propionic acid n-octadecyl alcohol ester, 1,1,3-tris(2-methyl-4-hydroxy-5-tert-butylphenyl)butane, 4-[(4,6-dioctylthio-1,3,5-triazine-2-yl)amino]-2,6-di-tert-butylphenol, dilauryl thiodipropionate, tri(nonylphenyl)phosphorous acid ester, triphenyl phosphite, 2-mercaptobenzimidazole, etc.

The function of the plasticizer is mainly to improve the toughness of the finished three-dimensional object, and the plasticizer may be, for example, dioctyl phthalate, butyl benzyl phthalate, diisononyl phthalate, diisodecyl phthalate, diethyl adipate, dibutyl adipate, diisobutyl adipate, di(2-butoxyethyl) adipate, di(2-ethylhexyl) adipate, triethyl citrate, triethyl acetyl citrate, tributyl citrate and tributyl acetyl citrate.

The function of the dispersant is mainly to raise and improve the dispersion stability of colorant. For example, the choice of a specific dispersant is not limited. At present, there are many dispersant products on the market, for example, BYK102, BYK108, BYK110, BYK180, BYK9133, BYK9076, BYK9131, TEGO Dispers655, Dispers675, Dispers688, Dispers750, Dispers670, etc.

In the present application, when both the first liquid material and the second liquid material have no colorant, a high-molecular polymer formed by the polymerization reaction of the active component is mixed with the powder material at molecular level. At this time, it is easy to obtain a colorless or light-colored transparent three-dimensional object.

When the first liquid material and/or the second liquid material contain the colorant, it is possible to obtain a chromatic three-dimensional object. The colorant may be a dye or a pigment.

Specifically, the pigment may be selected from one or more of C.I.Pigment White 6, C.I.Pigment Red 3, C.I.Pigment Red 5, C.I.Pigment Red 7, C.I.Pigment Red 9, C.I.Pigment Red 12, C.I.Pigment Red 13, C.I.Pigment Red 21, C.I.Pigment Red 31, C.I.Pigment Red49:1, C.I.Pigment Red 58:1, C.I.Pigment Red 175; C.I.Pigment Yellow 63, C.I.Pigment Yellow 3, C.I.Pigment Yellow 12, C.I.Pigment Yellow 16, C.I.Pigment Yellow 83; C.I.Pigment Blue 1, C.I.Pigment Blue 10, C.I.Pigment Blue B, Phthalocyanine Blue BX, Phthalocyanine Blue BS, C.I.Pigment Blue61:1, etc.

Specifically, the dye may be selected from C.I. acid red 37, C.I. acid red 89 (weak acid red 3B, 2BS), C.I. acid red 145 (weak acid bright red GL), C.I. acid orange 67 (weak acid yellow RXL), C.I. acid orange 116 (acid orange AGT), C.I. acid orange 156 (weak acid orange 3G), C.I. acid yellow 42 (weak acid yellow Rs, acid yellow R), C.I. acid yellow 49 (acid yellow GR200), C.I. acid blue 277, C.I. acid blue 344, C.I. acid blue 350, C.I. acid blue 9 (brilliant blue FCF), C.I. green 17, C.I. acid green 28, C.I. acid green 41, C.I. acid green 81, C.I. acid violet 17 (acid violet 4BNS), C.I. acid violet 54 (weak acid brilliant red 10B), C.I. acid violet 48, C.I. acid brown 75, C.I. acid brown 98, C.I. acid brown 165, C.I. acid brown 348, C.I. acid brown 349, C.I. acid black 26, C.I. acid black 63, C.I. acid black 172, C.I. acid black 194, C.I. acid black 210, C.I. acid black 234, C.I. acid black 235, C.I. acid black 242, Orasol Red 395/BL, etc.

In the second liquid material of the present application, the second auxiliary agent is used for promoting the polymerization reaction of the first liquid material, and specifically to initiate or catalyze the polymerization reaction of the active component in the first liquid material. Specifically, the second auxiliary agent includes at least one of an initiator, a pro-initiator and a catalyst. Based on a total weight of the second liquid material being 100%, the weight ratio of the second auxiliary agent in the second liquid material is 0.1% to 40%, specifically, 0.1%, 1%, 5%, 10%, 15%, 20%, 25%, 30%, 35%, 40%, or other values within the above range, which is not limited herein.

The initiator is selected from water-soluble or water-dispersible initiators, which may be azobisisobutylamidine hydrochloride, azobisisobutylimidazoline salt, azobiscyanovaleric acid, azobisisopropylimidazoline, sodium persulfate, ammonium persulfate, potassium persulfate, polymethacrylate containing azobis group, self-emulsifying polyurethane containing azobis group, or aqueous dispersions of some organic peroxides (Ref. Di Zhigang. PVC initiator-aqueous dispersion of organic peroxides [J] Polyvinyl Chloride, No.2, 1995).

The pro-initiator may be selected from partially water-soluble pro-initiators such as ferrous lactate, dimethylaniline, tetramethylthiourea, dimethylthiourea, etc. When the first liquid material contains the high-temperature initiator, the preinitiator is added into the second liquid material to reduce the polymerization temperature of the first liquid material so as to achieve the effect of enhancing the strength.

The catalyst may be triethylbenzylammonium chloride, triethylamine, triethanolamine, methylfluorosulfonic acid, ethylfluorosulfonic acid, methyl nitrobenzene sulfonic acid, methyl methanesulfonate, etc.

The second liquid material contains water, and the weight ratio of water in the second liquid material is 30% to 90%, specifically 30%, 35%, 40%, 45%, 50%, 55%, 60%, 80%, 85%, 90%, or other values within the above range, which is not limited herein. The main function of water contained in the second liquid material is that water can lower the temperature of the powder material in the non-molding area when the second liquid material is sprayed on the non-molding area, and that the evaporated water can take away the temperature of the powder material in the non-molding area when water is evaporated, thereby preventing the powder material in the non-molding area from being melted and/or dissolved by the first liquid material, adhered to the surface of the molded object, to affect the surface accuracy of the object. The use of water is less costly and more environmentally friendly than the use of other volatile solvents.

The second liquid material contains a powder release agent, and the weight ratio of the powder release agent in the second liquid material is 0.01% to 10%. The powder release agent is selected from at least one of a silicon-containing water-soluble release agent, a silicon-containing water-dispersible release agent, a fluorine-containing water-soluble release agent and a fluorine-containing water-dispersible release agent.

Specifically, the silicon-containing water-soluble release agent or the silicon-containing water-dispersible release agent is selected from a silicone oil emulsion. The fluorine-containing water-soluble release agent or the fluorine-containing water-dispersible release agent may be selected from a fluorine-containing nonionic surfactant or a fluorine-containing anionic surfactant.

Exemplarily, the silicone oil emulsion may be a mixture containing a polysiloxane polymer with water as a dispersant.

The fluorine-containing nonionic surfactant may be a polyoxyethylene ether of a fluorine-containing fatty alcohol, a polyoxyethylene ether of a fluorine-containing phenol, a polyoxyethylene ester of a fluorine-containing carboxylic acid, a polyoxyethylene ether of a fluoroalkyl sulfonyl alcohol amine, and a polyoxyethylene ether of a fluorine-containing mercaptan.

The fluorine-containing anionic surfactant may be a fluorine-containing carboxylate, a fluorine-containing sulfonate, a fluorine-containing phosphate, etc.

The three-dimensional printing material provided in this embodiment is applied to the printing of a three-dimensional object. During the printing of the three-dimensional object, the amount of the second liquid material per unit volume of the molding area is controlled to be less than the amount of the second liquid material per unit volume of the non-molding area. The main function of the second liquid material in the molding area is to promote the polymerization reaction of the first liquid material to form a polymer. The main function of the second liquid material in the non-molding area is to reduce the temperature of the powder material in the non-molding area, prevent the first liquid material in the molding area from diffusing into the non-molding area, and improve the surface accuracy of the formed three-dimensional object.

The function of the powder release agent contained in the second liquid material is to reduce the surface tension of the powder surface. Further, since the amount of the second liquid material sprayed per unit volume of the molding area is less than the amount of the second liquid material sprayed per unit volume of the surrounding non-molding area, the surface tension of powder surfaces or the surface tension between powders in the non-molding area surrounding the molding area is less than the surface tension of powder surfaces or the surface tension between powders in the molding area, and the first liquid material in the molding area is not easy to diffuse to the edge.

In the present application, the weight ratio of the powder release agent is controlled to be 0.01% to 10%, specifically 0.01%, 0.05%, 0.08%, 0.1%, 0.5%, 0.9%, 1.1%, 2.6%, 3.9%, 4%, 5%, 6.6%, 7.9%, 9.9%, or 10%, which is not limited herein. After many tests, it is found that when the weight ratio of the powder release agent is less than 0.01%, the first liquid material in the molding area cannot be effectively prevented from diffusing to the non-molding area. When the weight ratio of the powder release agent is more than 10%, it is found in the present application that the penetration of the first liquid material into the powder material layer is affected and the diffusion of the first liquid material in the molding area to the edge is inhibited when some powder release agents have a content exceeding a certain level, which is conducive to the improvement of the surface accuracy of the edge of the molding area.

The second liquid material contains a stripping agent, and the weight ratio of the stripping agent in the second liquid material is 1% to 30%, specifically 1%, 2%, 5%, 8%, 12%, 15%, 18%, 19%, 22%, 24%, 25%, 28%, 29%, or 30%, which is not limited herein. The stripping agent is selected from a water-soluble polymer and/or a water-dispersible polymer having a glass transition temperature lower than 40°C, preferably a water-soluble polymer or a water-dispersible polymer having a glass transition temperature lower than 0°C, so as to be readily destructible during the sandblasting process.

Specifically, the water-soluble polymer or the water-dispersible polymer is selected from at least one of polyether resin, polyester resin, poly (meth) acrylate resin, and polyurethane resin.

Understandably, when the second liquid material is applied to the non-molding area of the powder material, the stripping agent bonds together the powder material in the non-molding area at the edge of the molding area, and the stripping agent is conducive to the stripping of the powder material in the non-molding area from the solid portion formed in the molding area, and is beneficial to the separation of the recovered powder material from other powder in the molding area.

The second liquid material contains a hydrocarbon chain surfactant, and the weight ratio of the hydrocarbon chain surfactant in the second liquid material is 0.1% to 10%, specifically 0.1%, 0.5%, 0.9%, 1.1%, 2.6%, 3.9%, 4%, 5%, 6.6%, 7.9%, 9.9%, or 10%, which is not limited herein. A proper amount of hydrocarbon chain surfactant is added into the second liquid material, which is beneficial to the dissolution or dispersion of the second auxiliary agent, the powder release agent and the stripping agent in water, and is beneficial to the formation of a uniform liquid.

Specifically, the hydrocarbon chain surfactant is selected from one or more of fatty alcohol polyoxyethylene ether, sodium alkyl sulfonate, sodium alkyl benzene sulfonate, sodium alkyl sulfate, sodium alkyl succinate sulfonate, sodium sulfamate, polyether, and polyoxyethylene polyoxypropylene ether block copolymer.

In another optional implementation, the second liquid material further contains a co-solvent, and the weight ratio of the co-solvent in the second liquid material is 0.05% to 30%, specifically 0.05%, 0.1%, 1%, 2%, 5%, 8%, 12%, 15%, 18%, 19%, 22%, 24%, 25%, 28%, 29%, or 30%, which is not limited herein. The co-solvent is selected from at least one of at least one of alcohol, alcohol ether, amide, pyrrolidone, organic acid and organic salt. A proper amount of co-solvent is added into the second liquid material, so that the solubility of the second auxiliary agent, the powder release agent, the stripping auxiliary agent, etc., in the second liquid material can be effectively increased, and the surface precision of the formed three-dimensional object is further improved.

Specifically, the alcohol may be at least one of ethylene glycol, propylene glycol, glycerol, butylene glycol, diethylene glycol, etc. The alcohol ether may be at least one of polyethylene glycol 200, polyethylene glycol 400, propylene glycol ether, etc. The amide may be at least one of urea, acetamide, etc. The pyrrolidone may be at least one of pyrrolidone, hydroxyethyl pyrrolidone, methyl pyrrolidone, etc. The organic acid may be at least one of p-aminobenzoic acid, benzenesulfonic acid, ascorbic acid, etc. The organic salt may be at least one of sodium benzoate, sodium salicylate, etc.

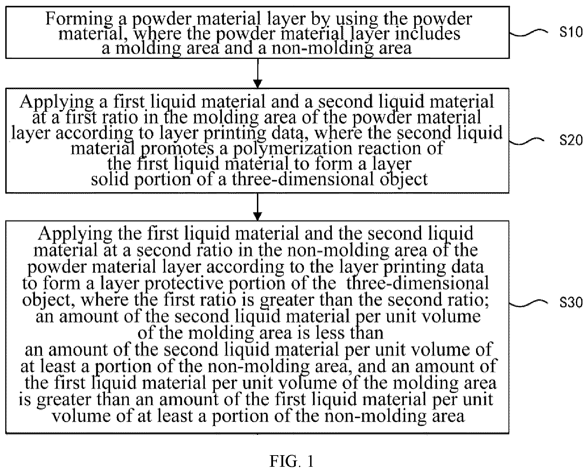

FIG. 1 is a schematic flow chart of a three-dimensional object printing method according to an embodiment of the present application. As shown in FIG. 1, on the other hand, the present application provides a three-dimensional object printing method, which includes the following steps:
Step S10, forming a powder material layer by using a powder material, where the powder material layer includes a molding area and a non-molding area.
Step S20, applying a first liquid material and a second liquid material at a first ratio in the molding area of the powder material layer according to layer printing data, where the second liquid material promotes a polymerization reaction of the first liquid material to form a layer solid portion of a three-dimensional object.
Step S30, applying the first liquid material and the second liquid material at a second ratio in the non-molding area of the powder material layer according to the layer printing data to form a layer protective portion of the three-dimensional object, where the first ratio is greater than the second ratio; an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

In the above solution, the first liquid material and the second liquid material are separately stored and applied to the molding area and the non-molding area of the powder material layer at different preparation ratios. Therefore, it is not only conducive to the improvement of the storage stability and the inkjet printing smoothness of the liquid materials, but also conducive to the reduction of the temperature of the non-molding area, conducive to the reduction of the effect of the first liquid material on the powder material in the non-molding area, and conducive to the reduction of the difficulty of post-processing of printed three-dimensional objects, especially the difficulty of post-processing of the surface of the three-dimensional objects, thereby improving the surface precision of the printed objects.

In the present application, the powder material is the aforementioned metal powder material or organic polymer powder material. When the powder material is an organic polymer powder material, the organic polymer powder material may not be dissolved by the first liquid material and also not be dissolved by the second liquid material, or, at least a portion of the organic polymer powder material may be dissolved by the first liquid material but not be dissolved by the second liquid material, which depends on the specific composition of the first liquid material.

Specifically, when the powder material is not dissolved by the first liquid material and is also not dissolved by the second liquid material, the reaction mechanism of this embodiment is that: the second liquid material promotes the polymerization reaction of the first liquid material in the molding area of the powder material layer, and the polymer formed by the reaction wraps the powder material which is in contact with the first liquid material to form the layer solid portion of the three-dimensional object. In the non-molding area of the powder material layer, the content or concentration of the first liquid material in the non-molding area is diluted through controlling the magnitude of the second ratio, such that no effective polymerization reaction occurs to form a polymer. Or, a small amount of free polymer formed by the polymerization reaction of the first liquid material in the non-molding area cannot effectively wrap the powder material, but can form particles larger than the particles of the original powder material. In the non-molding area of the powder material layer, the second liquid material is mainly used for reducing the temperature of the powder material in the non-molding area, and/or simultaneously preventing the first liquid material in the molding area from diffusing into the non-molding area to form the layer protective portion of the three-dimensional object, thereby improving the surface precision of the three-dimensional object. By reducing the ratio of the first liquid material in the non-molding area, the polymer cannot effectively wrap the powder material, but forms particles larger than the original powder particles, which is beneficial to sandblasting and the screening of recovered powder, thereby reducing the difficulty of post-processing.

When at least a portion of the polymer powder material is dissolved by the first liquid material but is not dissolved by the second liquid material, the reaction mechanism of this embodiment is that: the first liquid material dissolves the powder material which is in contact with the first liquid material in the molding area of the powder material layer, and the second liquid material promotes the polymerization reaction of the first liquid material to form a polymer so as to form the layer solid portion of the three-dimensional object. The formed polymer is blended with the dissolved powder material, especially reaches a molecular level of blending with the dissolved powder material to form a high-molecular alloy, so that there are good connections between the powder materials, between the powder material and the formed polymer, and between printed layers, presenting a "sea-island structure" or homogeneous structure, improving the mechanical strength of the three-dimensional object. In the non-molding area of the powder material layer, through controlling the magnitude of the second ratio, the content or concentration of the first liquid material is not enough to effectively dissolve the powder material which is in contact with the first liquid material, but the first liquid material can form particles larger than the particles of the original powder material, and the first liquid material cannot be effectively polymerized to form a polymer. Or, the first liquid material is polymerized to form a small amount of polymer that is free in non-molding area. In the non-molding area of the powder material layer, the second liquid material is mainly used for reducing the temperature of the powder material in the non-molding area, and/or simultaneously preventing the first liquid material in the molding area from diffusing into the non-molding area to form the layer protective portion of the three-dimensional object, thereby improving the surface precision of the three-dimensional object and reducing the difficulty of post-processing.

When the powder material layer is applied with the first liquid material and the second liquid material, the liquid materials can quickly penetrate into the interior powder material layer through gaps and partially remain on the surface layer, even wet the surface of the powder material in a selected area and at least partially dissolve the powder material. It should be noted that dissolution in each embodiment of the present application refers to all possible situations except complete insolubility.

It should be noted that the step numbers in the flowcharts of the present application do not indicate the order of sequence in the three-dimensional object printing process. In the actual printing process, step S20 may be before or after step S30, or, step S20 and step S30 may be executed at the same time, which is related to the printing mode and/or the shape of the object to be printed. Only a few not all cases are listed in the description of the present application.

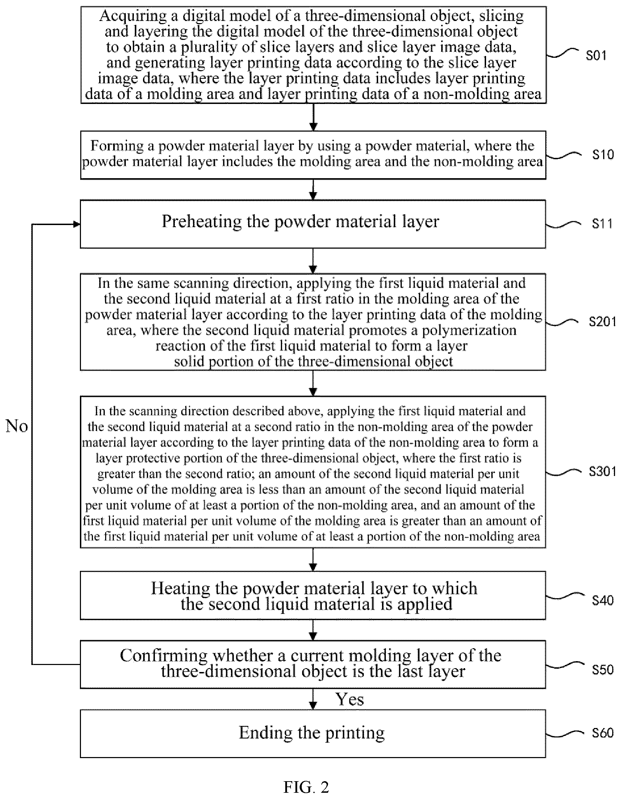

Referring to FIG. 2 together, the following detailed description is given in combination with specific embodiments.

Before step S10, the method further includes:
step S01, acquiring a digital model of a three-dimensional object, slicing and layering the digital model of the three-dimensional object to obtain a plurality of slice layers and slice layer image data, and generating layer printing data according to the slice layer image data, where the layer printing data includes layer printing data of a molding area and layer printing data of a non-molding area.

In a specific implementation, original data of the three-dimensional object may be obtained by scanning and is used for three-dimensional modeling to obtain the digital model of the three-dimensional object, or a three-dimensional object model is constructed by designing to obtain the digital model of the three-dimensional object, and the digital model is subjected to data format conversion, for example, it is converted to STL format, PLY format, WRL format and other formats that can be recognized by slicing software, and then the model is sliced and layered using the slicing software to obtain the slice layer image data, and the layer image data is processed to obtain the layer printing data indicating the object. The layer printing data includes the layer printing data of the molding area indicating the shape information of the object and the layer printing data of the non-molding area indicating the periphery of the object.

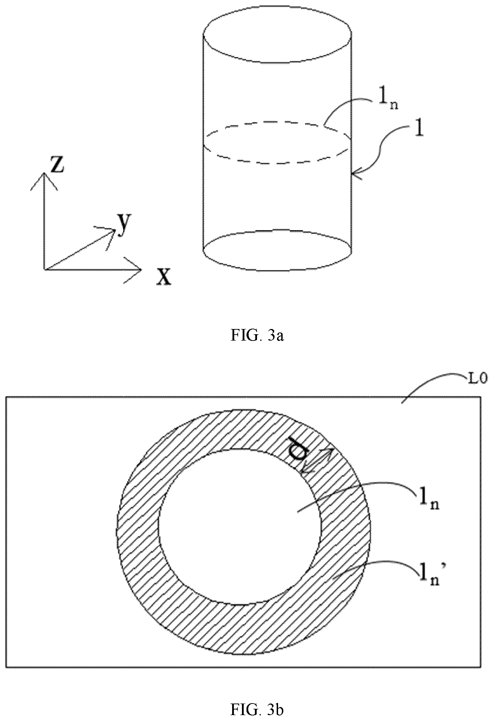

In the present application, the shape of the three-dimensional object to be printed is not limited and may be an object of any shape. FIG. 3a is a schematic structural diagram of a three-dimensional object to be printed according to an embodiment of the present application. As shown in FIG. 3a, in a specific embodiment, the three-dimensional object 1 to be printed may be, for example, a cylinder. The three-dimensional object 1 to be printed is sliced and layered to obtain a plurality of slice layers of the three-dimensional object 1 to be printed. The layer solid portion can be formed by printing according to the layer print data of the molding area 1n in the slice layers.

S 10, forming a powder material layer by using the powder material, where the powder material layer includes the molding area and the non-molding area.

In the actual printing process, the molding area 1n of the powder material layer forms the solid portion of the three-dimensional object, that is, the contour of the three-dimensional object to be printed and the area inside the contour, and the non-molding area is the area outside the contour of the three-dimensional object to be printed. In this embodiment, the protective portion of the three-dimensional object is formed within the non-molding area of the powder material layer.

FIG. 3b is a schematic structural diagram of a powder material layer according to an embodiment of the present application. As shown in FIG. 3b, all areas on the powder material layer L0 except the molding area 1n are non-molding areas, where an area 1n' is at least a portion of the non-molding areas, is located around the molding area 1n, and is called a layer protection portion. In other embodiments, the area 1n' may also be a non-molding area.

The powder material used in this embodiment is the same as the previous three-dimensional printing material, which is not described here. The thickness of the formed powder material layer is 10 µm to 500 µm, for example, 10 µm, 25 µm, 50 µm, 75 µm, 100 µm, 125 µm, 150 µm, 200 µm, 300 µm, 400 µm, or 500 µm. The thickness of the powder material layer is preferably 50 µm to 150 µm. Understandably, when the thickness of the powder material layer is thin, an object with high resolution can be formed, but the time taken to manufacture the object is greatly prolonged and the manufacturing cost is increased; when the thickness of the powder material layer is thick, the time for the liquid material to permeate the powder material will be prolonged, and the resolution of the manufactured object will be decreased, making it difficult to reach expectations.

In some embodiments, after step S10 and before step S201, the printing method further includes:
step S11, preheating the powder material layer.

Understandably, heat energy is provided on the formed powder material layer to preheat the powder material, and a preheating temperature is lower than a melting point or a melting temperature of the powder material by 5°C to 100°C. By preheating the powder material layer, the polymerization reaction of the first liquid material subsequently applied in the molding area can be effectively promoted, thereby preventing the first liquid material in the molding area from diffusing to the non-molding area to affect the surface accuracy of the molded object, and/or, the evaporation of partial components (such as water) in the second liquid material subsequently applied in the molding area is promoted, thereby increasing the concentration of the auxiliary agent in the second liquid material in the molding area, and further accelerating the polymerization reaction rate of the first liquid material.

In some embodiments, energy for preheating includes at least one of radiant energy and thermal energy, and in particular, the preheating may be performed by infrared radiation, visible light irradiation, etc.

In order to effectively improve the inkjet printing efficiency, the first liquid material and the second liquid material may be inkjet printed in the same scanning direction during the printing process.

Step S20 may be specifically implemented as follows:
step S201, in the same scanning direction, applying the first liquid material and the second liquid material at a first ratio in the molding area of the powder material layer according to layer printing data of the molding area, where the second liquid material promotes a polymerization reaction of the first liquid material to form a layer solid portion of the three-dimensional object.

In some embodiments, the first liquid material and the second liquid material are stored independently and applied to the molding area and the non-molding area of the powder material layer at different preparation ratios, which is not only conducive to the improvement of the storage stability of the liquid materials, but also conducive to the improvement of the inkjet printing smoothness of the liquid materials.

In an embodiment of the present application, the first liquid material includes a first active component. The weight ratio of the first active component in the first liquid material is 10% to 95%. The first active component dissolves at least a portion of the powder material.

Specifically, the first active component has an active group that can participate in the polymerization reaction, and the active group includes at least one of carbon-carbon double bond, hydroxyl group, carboxyl group, sulfur-containing heterocyclic propane group, carbonate group, epoxy group, liquid cyclic lactone structure, and cyclic acetal structure. The first active component may be selected from at least one of a monomer containing carbon-carbon double bond, a composition of a substance containing an epoxy group and a substance promoting ring-opening polymerization reaction of an epoxy group, a cyclic lactone, a sulfur heterocyclic compound, a carbonate compound and a cyclic amide compound. It should be noted that the active component does not polymerize with the powder material. For specific examples, please refer to the introduction in the aforementioned three-dimensional printing materials, which will not be repeated here.

The second liquid material includes the following components in percentage by weight: 0.1% to 40% of a second auxiliary agent, 30% to 90% of water, 0.01% to 10% of a powder release agent, 1% to 30% of a stripping agent, and 0.1% to 10% of a hydrocarbon chain surfactant. The second auxiliary agent is used for promoting the polymerization reaction of the first liquid material, and specifically to initiate or catalyze the polymerization reaction of the first active component in the first liquid material.

Specifically, the second auxiliary agent includes at least one of an initiator, a pro-initiator and a catalyst. The initiator is selected from water-soluble or water-dispersible initiator. The pro-initiator may be selected from partially water-soluble pro-initiators. The catalyst may be triethylbenzylammonium chloride, triethylamine, triethanolamine, methylfluorosulfonic acid, ethylfluorosulfonic acid, methyl nitrobenzene sulfonic acid, methyl methanesulfonate, etc.

The powder release agent is selected from at least one of a silicon-containing water-soluble release agent, a silicon-containing water-dispersible release agent, a fluorine-containing water-soluble release agent and a fluorine-containing water-dispersible release agent. After many tests, it is found that the powder release agent can reduce the surface tension of the powder surface, and a proper amount of the powder release agent may affect the penetration of the first liquid material into the powder material layer and inhibit the diffusion of the first liquid material in the molding area to the edges, which is conducive to the improvement of the surface accuracy of the edge of the molding area.

The stripping agent is selected from a water-soluble polymer and/or a water-dispersible polymer having a glass transition temperature lower than 40°C, and preferably a water-soluble polymer or a water-dispersible polymer having a glass transition temperature lower than 0°C. Specifically, the water-soluble polymer or the water-dispersible polymer is selected from at least one of polyether resin, polyester resin, poly(meth)acrylate resin, and polyurethane resin. The stripping agent is conducive to the stripping of the powder material in the non-molding area from the solid portion formed in the molding area, and is beneficial to the separation of the recovered powder material from other powder in the non-molding area.

The hydrocarbon chain surfactant is selected from one or more of fatty alcohol polyoxyethylene ether, sodium alkyl sulfonate, sodium alkyl benzene sulfonate, sodium alkyl sulfate, sodium alkyl succinate sulfonate, sodium sulfamate, polyether, and polyoxyethylene polyoxypropylene ether block copolymer. A proper amount of hydrocarbon chain surfactant is added into the second liquid material, which is beneficial to the dissolution or dispersion of the second auxiliary agent, the powder release agent and the stripping agent in water, and is beneficial to the formation of a uniform liquid.

The second liquid material contains water. The main function of water contained in the second liquid material is that water can lower the temperature of the powder material in the non-molding area when the second liquid material is sprayed on the non-molding area, and that the evaporated water can take away the temperature of the powder material in the non-molding area when water is evaporated, thereby preventing the powder material in the non-molding area from being melted and/or dissolved by the first liquid material to bond to the surface of the molded object and thus affect the surface accuracy of the object. The use of water is less costly and more environmentally friendly than the use of other volatile solvents.

In another optional implementation, the second liquid material further contains a co-solvent with a weight ratio of 0.05% to 30%. The co-solvent is selected from at least one of alcohol, alcohol ether, amide, pyrrolidone, organic acid and organic salt. A proper amount of co-solvent is added into the second liquid material, so that the solubility of the second auxiliary agent, the powder release agent, the stripping auxiliary agent, etc., in the second liquid material can be effectively increased, and the surface precision of the formed three-dimensional object is further improved.

Specifically, the first ratio is a ratio of the amount of the first liquid material applied to the molding area of the powder material layer to the amount of the second liquid material applied to the molding area of the powder material layer. It should be noted that the "amount" is a measure of how much of the first liquid material and the second liquid material, which may be a volume or a weight or the number of ink droplets, and is not limited in the present application.

In a specific embodiment, the first ratio is a volume ratio of the first liquid material to the second liquid material, the first ratio is (1-10): 1, and the first ratio may specifically be 1:1, 2:1, 3:1, 5:1, 6:1, 7:1, 8:1, 10:1, etc. The value of the first ratio in the molding area of the powder material layer is controlled such that the second liquid material promotes the first liquid material to rapidly polymerize so as to obtain the layer solid portion of the three-dimensional object having specified material properties. When the second liquid material is insufficient, the polymerization reaction of the first liquid material occurs slowly and incompletely, and the strength of the final three-dimensional object is reduced. Since the first liquid material does not fully participate in the polymerization reaction to form the polymer, the excess first liquid material easily penetrates into the non-molding area, affecting the molding accuracy of the object. When the second liquid material is excessive, the second liquid material tends to lower the temperature of the powder material in the molding area, thereby lowering the polymerization reaction rate of the first liquid material and/or lowering the dissolution rate of the first liquid material for dissolving the powder material.

Cooperatively, step S30 may be specifically implemented as follow:
step S301, in the same scanning direction as step S201, applying the first liquid material and the second liquid material at a second ratio in the non-molding area of the powder material layer according to the layer printing data of the non-molding area to form a layer protective portion of the three-dimensional object, where the first ratio is greater than the second ratio; an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

The second ratio is a ratio of the amount of the first liquid material applied to the non-molding area of the powder material layer to the amount of the second liquid material applied to the non-molding area of the powder material layer. In the present application, the first ratio is larger than the second ratio, that is, when the first liquid material and the second liquid material are mixed, the proportion of the first liquid material in the mixture for the first ratio is larger than the proportion of the first liquid material in the mixture for the second ratio.

In a specific embodiment, the second ratio is a volume ratio of the first liquid material to the second liquid material, the second ratio is (0-0.95): 1, and the second ratio may specifically be 0, 0.05: 1, 0.1: 1, 0.2: 1, 0.5: 1, 0.7: 1, 0.8: 1, 0.95: 1, etc. When the second ratio is 0, it means that only the second liquid material is applied in the non-molding area of the powder material layer. At this time, the amount of the second liquid material applied in the non-molding area is required to satisfy that the amount of the second liquid material applied per unit volume of the non-molding area is greater than the amount of the second liquid material applied per unit volume of the molding area. The second liquid material is mainly used to lower the temperature of the powder material in the non-molding area and/or prevent the first liquid material in the molding area from penetrating into the non-molding area, thereby improving the surface accuracy of the formed three-dimensional object.

When the second ratio is greater than 0, it means that the first liquid material and the second liquid material are both applied in the non-molding area of the powder material layer, where the second liquid material is mainly used for reducing the temperature of the powder material in the non-molding area, and/or reducing the concentration of the first liquid material in the non-molding area through the second liquid material, thereby preventing the powder material in the non-molding area from being melted by high temperature to adhere to the surface of the three-dimensional object or from being dissolved by the first liquid material, and/or preventing the first liquid material in the molding area from penetrating into the non-molding area, so that the surface precision of the formed three-dimensional object is improved. Understandably, since the amount of the second liquid material per unit volume of the non-molding area is greater than the amount of the second liquid material per unit volume of the molding area, the endothermic evaporation of partial components can effectively reduce the temperature of the powder material in the non-molding area, thereby preventing the powder material in the non-molding area from adhering to the surface of the formed three-dimensional object, and improving the surface accuracy of the three-dimensional object.

In a specific implementation process, the amount of the first liquid material in the non-molding area of the powder material layer is controlled in the present application. When the second ratio is greater than 0.95: 1, in the non-molding area, the second liquid material promotes the polymerization reaction of the first liquid material to form a polymer with sufficient strength, and the polymer formed in the non-molding area is adhered to the surface of the object. Therefore, the surface accuracy of the formed three-dimensional object is reduced and the difficulty of post-processing is increased.

In the above embodiment, the amount of the second liquid material per unit volume of the molding area is less than the amount of the second liquid material per unit volume of the non-molding area. The main function of the second liquid material in the molding area is to promote the polymerization reaction of the first liquid material to form a polymer, and the polymer formed in the molding area is blended with the dissolved powder material, especially reaches a molecular level of blending with the dissolved powder material to form a high-molecular alloy, which can improve the mechanical strength of the three-dimensional object.

The main function of the second liquid material in the non-molding area is to reduce the temperature of the powder material in the non-molding area. The second liquid material in the non-molding area can also prevent the first liquid material in the molding area from diffusing into the non-molding area. Specifically, since the content of the second liquid material sprayed per unit volume of the molding area is less than the amount of the second liquid material sprayed per unit volume of the surrounding non-molding area, under the action of the powder release agent in the second liquid material, the surface tension of powder surfaces or the surface tension between powders in the non-molding area surrounding the molding area is less than the surface tension of powder surfaces or the surface tension between powders in the molding area, and the first liquid material in the molding area is not easy to diffuse to the edge. That is, it is difficult for the first liquid material to penetrate into the powder material in the non-molding area and dissolve the powder material in the non-molding area, which is conducive to the reduction of the effect of the first liquid material on the powder material in the non-molding area. Further, since the second liquid material contains water, when a sufficient amount of water is evaporated, the temperature of the powder material in the non-molding area can be taken away, which is conducive to the reduction of the temperature of the non-molding area, thereby preventing the powder material in the non-molding area from adhering to the surface of the formed layer solid portion (corresponding to the molding area) at a high temperature. Therefore, an interface can be formed between the formed layer solid portion and the layer protection portion, and the layer protection portion cannot be fused with the layer solid portion, thereby improving the surface precision of the formed three-dimensional object.

In addition, the proportion of the first liquid material in the liquid material applied to the non-molding area is low, the polymer formed by the first liquid material cannot effectively wrap the powder material, but can form particles larger than the particles of the original powder material, which is conducive to the sandblasting and screening of recovered powder, reducing the difficulty of post-processing of the printed three-dimensional object (especially the post-processing of the surface of the three-dimensional object), thereby improving the surface accuracy of the printed object.

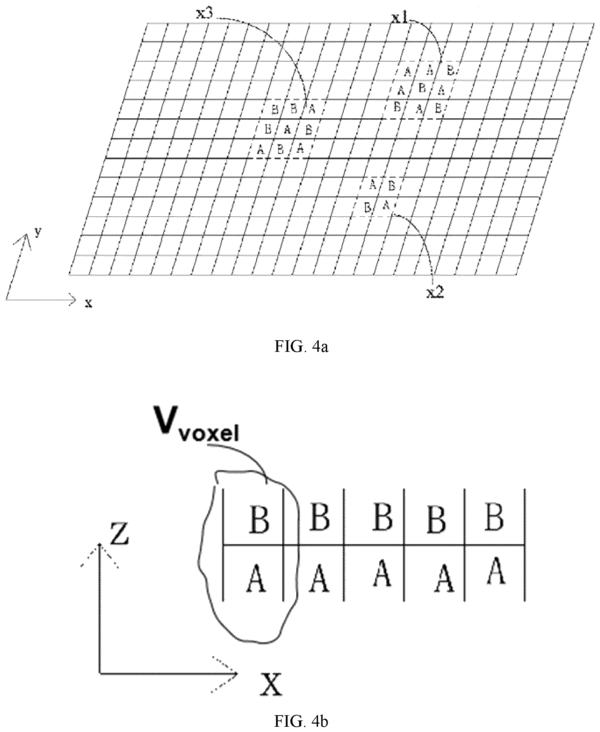

FIGS. 4a-4e are schematic structural diagrams showing falling points of ink droplets when a first liquid material and a second liquid material are sprayed at a specified ratio according to an embodiment of the present application. As shown in FIG. 4a-4e, in FIG. 4a, the x-direction is a scanning direction of a printing head, the y-direction is a stepping direction of the printing head, and each small square represents a minimum printing unit of a printer. The minimum printing unit in three-dimensional printing is called a voxel, and the minimum printing unit in a two-dimensional plane is called a pixel. Each broken line frame in the figure represents a mixing unit. The first liquid material A and the second liquid material B are sprayed in the mixing unit according to a ratio. For example, in the mixing unit X1, the first liquid material A and the second liquid material B are respectively sprayed in different voxels and mixed according to a volume ratio of 5:4. When the first liquid material A is in contact with the second liquid material B, the second liquid material B promotes the polymerization reaction of the first liquid material A. For example, in the mixing unit X2, the first liquid material A and the second liquid material B are mixed in a volume ratio of 1:1. For example, in the mixing unit X3, the first liquid material A and the second liquid material B are mixed at a volume ratio of 0.8: 1. In this specific embodiment, the mixing unit is an area where the first liquid material A and the second liquid material B are sprayed at a specified ratio to achieve substantially uniform mixing, and the actual size of the area is not limited herein.

During printing, the first liquid material and the second liquid material are sprayed at a specified ratio based on mixing units. In the printing process of a layer solid portion of a three-dimensional object, mixing units may be in a single form or may be combined with other forms of mixing units, which is not limited herein.

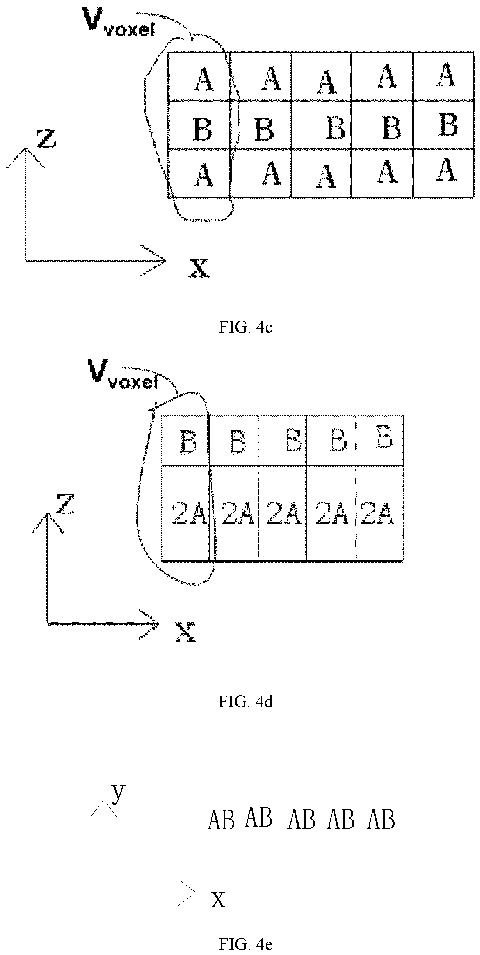

FIG. 4b is another schematic diagram showing falling points of ink droplets of the first liquid material and the second liquid material. The x-direction is a scanning direction of a printing head, and the Z-direction is a stacking direction of ink droplets. In this specific embodiment, the first liquid material A and the second liquid material B are sprayed to the same voxel position at a specified ratio. As shown in FIG. 4b, in the inkjet printing process, the first liquid material A and the second liquid material B are sprayed to the same voxel position Vᵥₒₓₑₗ at a volume ratio of 1:1, and ink droplets are stacked in the Z-direction. Alternatively, as shown in FIG. 4c, in the inkjet printing process, the first liquid material A and the second liquid material B are sprayed to the same voxel position Vᵥₒₓₑₗ at a volume ratio of 2:1, ink droplets are stacked in the Z-direction, and two droplets of the first liquid material A with the same volume are sprayed to the same voxel position. Alternatively, as shown in FIG. 4d, in the inkjet printing process, the first liquid material A and the second liquid material B are sprayed to the same voxel position Vᵥₒₓₑₗ at a volume ratio of 2: 1, ink droplets are stacked in the Z-direction, and in the same voxel position, the volume of a single ink droplet of the first liquid material A is twice that of a single ink droplet of the second liquid material B. Alternatively, as shown in FIG. 4e, the x-direction is a scanning direction of a printing head, and the y-direction is a stepping direction of the printing head, and in the inkjet printing process, the first liquid material A and the second liquid material B are sprayed to the same voxel position Vᵥₒₓₑₗ at a volume ratio of 1:1, and ink droplets are arranged on a horizontal plane in the same voxel. In the present application, the first liquid material and the second liquid material are sprayed in the molding area and the non-molding area at a specified ratio, and the manner by which ink droplets fall may be a combination of the above various manners, which is not limited herein.

Since the powder material in the non-molding area needs to be removed from the surroundings of the target object after the printing of the three-dimensional object is completed, it is preferable for the present application to reduce the range of the non-molding area in which the liquid materials are sprayed in order to improve the recycling rate of the powder material.

In this embodiment, on the premise of ensuring that the layer protective portion has the aforementioned function, the width d of the layer protection portion is greater than or equal to the minimum diameter of droplets of the applied liquid materials. If the diameter of the minimum droplet is 10 µm in the ink jetting process, d is greater than or equal to 10 µm in this embodiment.

In another optional embodiment, in the area 1n' in the non-molding area, the amount of the second liquid material per unit volume of the non-molding area gradually decreases in a direction away from the molding area. Therefore, the amount of the second liquid material sprayed in the non-molding area is reduced, and the printing cost of the three-dimensional object is reduced.

In each specific embodiment of the present application, in order to improve the strength of the formed three-dimensional object, reduce the possibility that the powder material in the non-molding area is adhered to the surface of the three-dimensional object formed by printing, improve the peelability of the powder material in the non-molding area adhered to the surface of the three-dimensional object, and allow a clear interface to be formed between the layer solid portion and the layer protective portion of the three-dimensional object, the amount of the second liquid material per unit volume of the molding area is defined to be less than the amount of the second liquid material per unit volume of at least a portion of the non-molding area, and the amount of the first liquid material per unit volume of the molding area is defined to be greater than the amount of the first liquid material per unit volume of at least a portion of the non-molding area.

Further, after the step S20 and the step S30, and more specifically, after the step S201 and the step S301 being performed, the printing method further includes: step S40, heating the powder material layer to which the second liquid material is applied.

Understandably, thermal energy is provided on the powder material layer to which the second liquid material is applied to heat the powder material layer to which the second liquid material is applied, and the heating temperature is higher than 70°C and lower than the melting point or the melting temperature of the powder material by 5°C or more. In this specific embodiment, by heating the powder material layer to which the second liquid material is applied, the polymerization reaction of the first liquid material in the molding area can be further promoted, thereby preventing the first liquid material in the molding area from diffusing to the non-molding area to affect the surface accuracy of the molded object; and/or, the evaporation of some components in the second liquid material (e.g., the evaporation of water) is promoted, thereby increasing the concentration of the second auxiliary agent in the second liquid material in the molding area to further accelerate the polymerization reaction rate of the first liquid material. Since the amount of the second liquid material per unit volume of the non-molding area is greater than the amount of the second liquid material per unit volume of the molding area, the endothermic evaporation of some components can effectively reduce the temperature of the powder material in the non-molding area, thereby preventing the powder material in the non-molding area from adhering to the surface of the formed three-dimensional object, and improving the surface accuracy of the three-dimensional object.

In some specific embodiments, energy for heating includes at least one of radiant energy and thermal energy, and specifically, the heating may be performed by infrared radiation, visible light irradiation, etc.

In the three-dimensional object printing process, after step S40, the printing method further includes:
step S50, confirming whether a current molding layer of the three-dimensional object is the last layer, and if not, repeating the above steps from forming the powder material layer to forming the molding layer, so that a plurality of molding layers obtained are stacked layer-by-layer to form the three-dimensional object.

Understandably, the digital model of the three-dimensional object is sliced and layered to obtain at least one slice layer. In the printing process of the three-dimensional object, molding layers are stacked layer-by-layer after respective molding layers are formed until all slice layers are printed to form the target three-dimensional object. Otherwise, it is necessary to repeatedly form the powder material layer and spray the first liquid material and the second liquid material to form the layer solid portion and the layer protective portion according to the layer printing data. The layer solid portion and the layer protective portion forms a molding layer, and molding layers are stacked layer-by-layer to form the three-dimensional object.

In the printing process of the three-dimensional object, the second liquid material is applied to the molding area for promoting the polymerization reaction of the first liquid material, and the first liquid material dissolves at least a portion of the powder material to form the layer solid portion of the three-dimensional object. The second liquid material in the non-molding area does not promote or slowly promotes the polymerization reaction of the first liquid material to form the layer protective portion of the three-dimensional object. The main function of applying the second liquid material to the non-molding area is to prevent the first liquid material in the molding area from penetrating into the non-molding area, thereby preventing the penetrated first liquid material from interacting with the powder material in the non-molding area to affect the surface accuracy of the formed object; and/or, to prevent the powder material in the non-molding area from being melted and adhered to the surface of the molded object to affect the surface precision of the object. There are no small molecules left in the three-dimensional object printed, and no small molecules are precipitated during use, which can meet the requirements of safety and environmental protection.

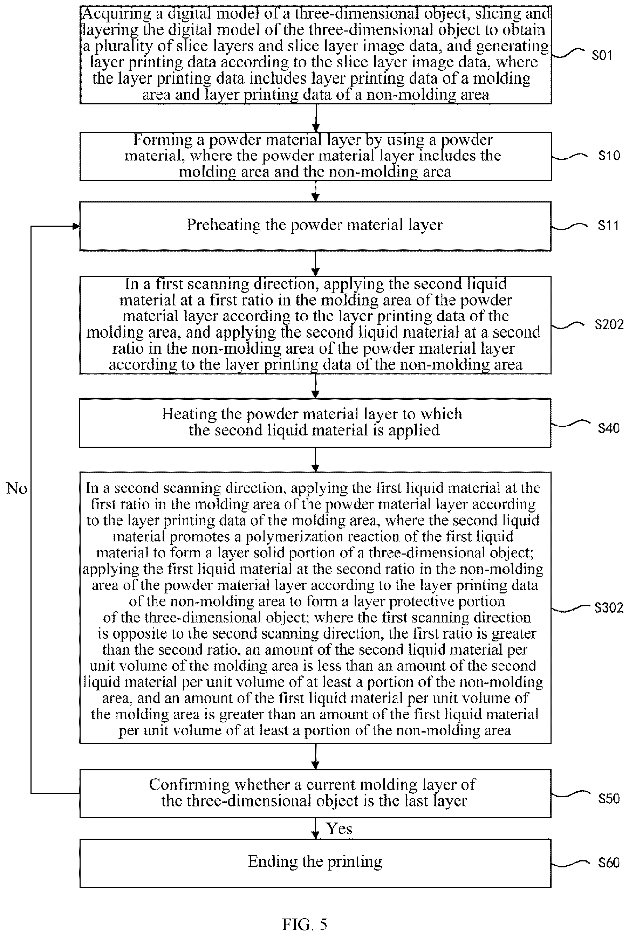

FIG. 5 is a schematic flow chart of a three-dimensional object printing method according to yet another embodiment of the present application. This embodiment is different from FIG. 2, during the printing process, the first liquid material A and the second liquid material B are subjected to inkjet printing in different scanning directions, and the second liquid material B is sprayed first and then the first liquid material A is sprayed later.

Specifically, after step S11, the printing method includes:
step S202, in a first scanning direction, firstly applying a second liquid material at a first ratio in the molding area of the powder material layer according to the layer printing data of the molding area, and applying the second liquid material at a second ratio in the non-molding area of the powder material layer according to the layer printing data of the non-molding area;
next, performing step S40, heating the powder material layer to which the second liquid material is applied;
then, performing step S302, in a second scanning direction, applying a first liquid material at the first ratio in the molding area of the powder material layer according to the layer printing data of the molding area, where the second liquid material promotes a polymerization reaction of the first liquid material to form a layer solid portion of a three-dimensional object; applying the first liquid material at the second ratio in the non-molding area of the powder material layer according to the layer printing data of the non-molding area to form a layer protective portion of the three-dimensional object; where the first scanning direction is opposite to the second scanning direction, the first ratio is greater than the second ratio, an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

In this specific embodiment, the first liquid material and the second liquid material are applied in different scanning directions. The second liquid material is applied first, and the powder material layer to which the second liquid material is applied is heated, and then the first liquid material is applied. In this embodiment, before the first liquid material is sprayed, at least some components, which is evaporable, in the second liquid material are evaporated. The amount of the second liquid material in the non-molding area is large, the evaporated components take away the temperature of the powder material in the non-molding area so that the temperature of the powder material in the non-molding area is lowered, and the concentrations of other components in the second liquid material are increased, which can promote the polymerization reaction rate of the first liquid material, and improve the surface accuracy of the formed object.

In the present application, the following examples and comparative examples were printed according to the three-dimensional printing materials provided above and by using the three-dimensional object printing method shown in FIG. 2. It should be noted that the printing steps of the examples and the comparative examples were the same.

### Example 1

Polypropylene particle was used as a powder material, and a formula of liquid materials was as follows:

| | | Drug name | Drug dosage (%) |
|---|---|---|---|
| First liquid material | First active component | Acryloyl morpholine | 50 |
| | Second active component | Cyclotrimethylolpropane methylal acrylate | 27.8 |
| | | Caprolactone acrylate | 10 |
| | | Polyurethane acrylate | 12 |
| | Polymerization inhibitor | Polymerization inhibitor 510 | 0.1 |
| | Flatting agent | BYK333 | 0.1 |
| Second liquid material | Initiator | Azobisisobutylamidine hydrochloride | 6 |
| | Co-solvent | Ethylene glycol | 30 |
| | Water | Water | 33.9 |
| | Powder release agent | Polydispersed polysiloxane polymer | 10 |
| | Stripping agent | Water-soluble polyether resin | 20 |
| | Hydrocarbon chain surfactant | Sodium dodecylbenzene sulfonate | 0.1 |

| | | | |
|---|---|---|---|
| Note: the water-soluble polyester resin did not react in the molding process, and the Tg of the water-soluble polyester resin was 10°C. | | | |

### Example 2

Polyurethane particle was used as a powder material, and a formula of liquid materials was as follows:

| | | Drug name | Drug dosage |
|---|---|---|---|
| First liquid material | First active component | Acryloyl morpholine | 50 |
| | Second active component | Cyclotrimethylolpropane methylal acrylate | 18.35 |
| | | Lauryl acrylate | 10 |
| | | Polyurethane acrylate | 15 |
| | High temperature initiator | Tert-butyl peroxide | 6 |
| | Polymerization inhibitor | Polymerization inhibitor 510 | 0.1 |
| | Flatting agent | BYK333 | 0.1 |
| | Antioxidant | Antioxidant 1010 | 0.1 |
| | Defoamer | TEGO Airex 920 | 0.1 |
| | Dispersant | BYK108 | 0.2 |
| | Dye | Orasol Red 395/BL | 0.05 |
| Second liquid material | Pro-initiator | Ferrous lactate | 3 |
| | Water | Water | 90 |
| | Powder release agent | Fluorine-containing fatty alcohol polyoxyethylene ether | 0.01 |
| | Stripping agent | Water-soluble acrylate emulsion | 6.89 |
| | Hydrocarbon chain surfactant | Poloxamer | 0.1 |

| | | | |
|---|---|---|---|
| Note: the Tg of water-based acrylate emulsion was -10°C. | | | |

### Example 3

Polyurethane particle was used as a powder material, and a formula of liquid materials was as follows:

| | | Drug name | Drug dosage |
|---|---|---|---|
| First liquid material | First active component | Acryloyl morpholine | 95 |
| | Second active component | Polyurethane acrylate | 5 |
| Second liquid material | Initiator | Polymethacrylate containing azo group | 30 |
| | | Azobisisobutylimidazoline salt | 10 |
| | Co-solvent | α-pyrrolidone | 20 |
| | Water | Water | 30 |
| | Powder release agent | Fluorine-containing fatty alcohol polyoxyethylene ether | 1 |
| | Stripping agent | Water-based polyurethane | 1 |
| | Hydrocarbon chain surfactant | Fatty alcohol polyoxyethylene ether | 7.8 |
| | | Sodium dodecylbenzene sulfonate | 0.2 |

| | | | |
|---|---|---|---|
| Note: the Tg of water-based polyurethane was 0°C. | | | |

### Example 4

Polyurethane particle was used as a powder material, and a formula of liquid materials was as follows:

| | | Drug name | Drug dosage |
|---|---|---|---|
| First liquid material | First active component | Acryloyl morpholine | 50 |
| | Second active component | Cyclotrimethylolpropane methylal acrylate | 24.5 |
| | | Lauryl acrylate | 10 |
| | | Polyurethane acrylate | 15 |
| | Polymerization inhibitor | Polymerization inhibitor 510 | 0.2 |
| | Flatting agent | BYK333 | 0.1 |
| | Antioxidant | Antioxidant 1010 | 0.1 |
| | Defoamer | TEGO Airex 920 | 0.1 |
| Second liquid material | Initiator | Azobisisobutylamidine hydrochloride | 10 |
| | Co-solvent | Butanediol | 10 |
| | Water | Water | 47.8 |
| | Powder release agent | Polyoxyethylene ester of fluorine-containing carboxylic acid | 2 |
| | Stripping agent | Water-based acrylate emulsion | 30 |
| | Hydrocarbon chain surfactant | Poloxamer 407 | 0.1 |
| | | Sodium dodecylbenzene sulfonate | 0.1 |

| | | | |
|---|---|---|---|
| Note: the Tg of water-based acrylate emulsion was -10°C. | | | |

### Example 5

Polyamide particle was used as a powder material, and a formula of liquid materials was as follows:

| | | Drug name | Drug dosage |
|---|---|---|---|
| First liquid material | First active component | Hydroxyethyl acrylamide | 40 |
| | | Acryloyl morpholine | 20 |
| | Second active component | Cyclotrimethylolpropane methylal acrylate | 24.5 |
| | | Isobomyl acrylate | 10 |
| | | Polyurethane acrylate | 5 |
| | Polymerization inhibitor | Polymerization inhibitor 510 | 0.2 |
| | Flatting agent | BYK333 | 0.1 |
| | Antioxidant | Antioxidant 1010 | 0.1 |
| | Defoamer | TEGO Airex 920 | 0.1 |
| Second liquid material | Initiator | Azobisisobutylamidine hydrochloride | 10 |
| | | Self-emulsifying polyurethane containing azo group | 10 |
| | Water | Water | 57.8 |
| | Powder release agent | Polyoxyethylene ester of fluorine-containing carboxylic acid | 2 |
| | Stripping agent | Water-based acrylate emulsion | 20 |
| | Hydrocarbon chain surfactant | Poloxamer 407 | 0.1 |
| | | Sodium dodecylbenzene sulfonate | 0.1 |

| | | | |
|---|---|---|---|
| Note: the Tg of water-based acrylate emulsion was -10°C. | | | |

### Example 6

Polyamide particle was used as a powder material, and a formula of liquid materials was as follows:

| | | Drug name | Drug dosage |
|---|---|---|---|
| First liquid material | First active component | Hydroxyethyl acrylamide | 40 |
| | | Acryloyl morpholine | 20 |
| | Second active component | Cyclotrimethylolpropane methylal acrylate | 20.5 |
| | | Isobomyl acrylate | 10 |
| | | Polyurethane acrylate | 5 |
| | High temperature initiator | Cumyl hydroperoxide | 4 |
| | Polymerization inhibitor | Polymerization inhibitor 510 | 0.2 |
| | Flatting agent | BYK333 | 0.1 |
| | Antioxidant | Antioxidant 1010 | 0.1 |
| | Defoamer | TEGO Airex 920 | 0.1 |
| Second liquid material | Pro-initiator | Dimethylaniline | 0.5 |
| | Water | Water | 58.3 |
| | Co-solvent | Diethylene glycol | 20 |
| | Powder release agent | Polyoxyethylene ester of fluorine-containing carboxylic acid | 1 |
| | Stripping agent | Water-based acrylate emulsion | 20 |
| | Hydrocarbon chain surfactant | Poloxamer 407 | 0.1 |
| | | Sodium dodecylbenzene sulfonate | 0.1 |

| | | | |
|---|---|---|---|
| Note: the Tg of water-based acrylate emulsion was -10°C. | | | |

### Example 7

Polyamide particle was used as a powder material, and a formula of liquid materials was as follows:

| | | Drug name | Drug dosage |
|---|---|---|---|
| First liquid material | First active component | Lactic acid | 20 |
| | | Acryloyl morpholine | 20 |
| | | Methacryloyloxyethyl succinate monoester | 20 |
| | Second active component | P-tert-butyl glycidyl ether | 10 |
| | | Butanediol diglycidyl ether | 17.5 |
| | | Epoxy resin E-51 | 10 |
| | High temperature initiator | Cumyl hydroperoxide | 2 |
| | Polymerization inhibitor | Polymerization inhibitor 510 | 0.2 |
| | Flatting agent | BYK333 | 0.1 |
| | Antioxidant | Antioxidant 1010 | 0.1 |
| | Defoamer | TEGO Airex 920 | 0.1 |
| Second liquid material | Pro-initiator | Dimethylaniline | 0.5 |
| | Catalyst | Triethylbenzylammonium chloride | 2 |
| | Water | Water | 56.3 |
| | Co-solvent | Diethylene glycol | 20 |
| | Powder release agent | Polyoxyethylene ester of fluorine-containing carboxylic acid | 1 |
| | Stripping agent | Water-based acrylate emulsion | 20 |
| | Hydrocarbon chain surfactant | Poloxamer 407 | 0.1 |
| | | Sodium dodecylbenzene sulfonate | 0.1 |

| | | | |
|---|---|---|---|
| Note: the Tg of water-based acrylate emulsion was -10°C. | | | |

Example 8: cellulose acetate was used as a powder material, and a formula of liquid materials was as follows:

| | | Drug name | Drug dosage |
|---|---|---|---|
| First liquid material | First active component | Acryloyl morpholine | 40 |
| | | Hydroxyethyl methacrylate | 30 |
| | | Tripropylene glycol diacrylate | 10 |
| | Second active component | Epoxy acrylate resin | 9.5 |
| | | Polyurethane acrylate | 10 |
| | Polymerization inhibitor | Polymerization inhibitor 510 | 0.2 |
| | Flatting agent | BYK333 | 0.1 |
| | Antioxidant | Antioxidant 1010 | 0.1 |
| | Defoamer | TEGO Airex 920 | 0.1 |
| Second liquid material | Initiator | Azobisisobutylamidine hydrochloride | 10 |
| | | Self-emulsifying polyurethane containing azo group | 10 |
| | Water | Water | 57.8 |
| | Powder release agent | Polyoxyethylene ester of fluorine-containing carboxylic acid | 2 |
| | Stripping agent | Water-based acrylate emulsion | 20 |
| | Hydrocarbon chain surfactant | Poloxamer 407 | 0.1 |
| | | Sodium dodecylbenzene sulfonate | 0.1 |

| | | | |
|---|---|---|---|
| Note: the Tg of water-based acrylate emulsion was 40°C. | | | |

### Example 9

The three-dimensional printing materials in Example 5 were used in combination with the three-dimensional object printing method in FIG. 2. The preheating temperature was 175°C. The heating temperature was 180°C. In the inkjet printing process, eight ink droplets were used for printing in a single voxel Vᵥₒₓₑₗ, and the volumes of respective ink droplets were basically the same. The first ratio was 4:4, indicating that four droplets of the first liquid material and four droplets of the second liquid material were sprayed in a single voxel of the molding area, respectively. The second ratio was 0:8, indicating that the first liquid material was not sprayed in the non-molding area and only eight droplets of the second liquid material were sprayed in a single voxel of the non-molding area.

### Example 10

The three-dimensional printing materials in Example 5 were used in combination with the three-dimensional object printing method in FIG. 2. The preheating temperature was 175°C. The heating temperature was 180°C. In the inkjet printing process, eight ink droplets were used for printing in a single voxel Vᵥₒₓₑₗ, and the volumes of respective ink droplets were basically the same. The first ratio was 7: 1, indicating that seven droplets of the first liquid material and one droplet of the second liquid material were sprayed in a single voxel of the molding area. The second ratio was 3:5, indicating that three droplets of the first liquid material and five droplets of the second liquid material were sprayed in a single voxel of the non-molding area.

### Example 11

The three-dimensional printing materials in Example 5 were used in combination with the three-dimensional object printing method in FIG. 2. The preheating temperature was 175°C. The heating temperature was 180°C. In the inkjet printing process, eight droplets of ink were used for printing in a single voxel Vᵥₒₓₑₗ of the molding area, four droplets of ink were used for printing in a single voxel Vᵥₒₓₑₗ of the non-molding area, and the volumes of respective ink droplets were basically the same. The first ratio was 6:2, indicating that six droplets of the first liquid material and two droplets of the second liquid material were sprayed in a single voxel of the molding area. The second ratio was 1:3, indicating that one droplet of the first liquid material and three droplets of the second liquid material were sprayed in a single voxel of the non-molding area.

### Comparative example 1:

Polyurethane particle was used as a powder material, and a formula of liquid materials was as follows:

| | | Drug name | Drug dosage |
|---|---|---|---|
| First liquid material | Active monomer | Acryloyl morpholine | 50 |
| | | Cyclotrimethylolpropane methylal acrylate | 27.8 |
| | | Caprolactone acrylate | 10 |
| | Prepolymer | Polyurethane acrylate | 10 |
| | Low temperature initiator | Benzoyl peroxide | 2 |
| | Polymerization inhibitor | Polymerization inhibitor 510 | 0.1 |
| | Flatting agent | BYK 333 | 0.1 |

### Comparative example 2:

Polyurethane particle was used as a powder material, and the first liquid material of Example 2 was used as a formulation of a liquid material.

### Comparative example 3:

Polyurethane particle was used as a powder material, the first liquid material of Example 4 was used as a formulation of a first liquid material of a spray liquid, and a formulation of a second liquid material was as follows:

| | | | |
|---|---|---|---|
| Second liquid material | Initiator | Azobisisobutylamidine hydrochloride | 10 |
| | Co-solvent | Butanediol | 10 |
| | Water | Water | 34.8 |
| | Powder release agent | Polyoxyethylene ester of fluorine-containing carboxylic acid | 15 |
| | Stripping agent | Water-based acrylate emulsion | 30 |
| | Hydrocarbon chain surfactant | Poloxamer 407 | 0.1 |
| | | Sodium dodecylbenzene sulfonate | 0.1 |

| | | | |
|---|---|---|---|
| Note: the Tg of water-based acrylate emulsion was -10°C. | | | |

### Comparative example 4:

Polyamide particle was used as a powder material, the first liquid material of Example 5 alone was used as a formulation of a spray liquid.

### Comparative example 5:

Polyamide particle was used as a powder material, the first liquid material of Example 5 was used as a formulation of a first liquid material of a spray liquid, and a formulation of a second liquid material was as follows:

| | | | |
|---|---|---|---|
| Second liquid material | Initiator | Azobisisobutylamidine hydrochloride | 10 |
| | Water | Water | 44.8 |
| | Co-solvent | Butanediol | 15 |
| | Stripping agent | Water-based acrylate emulsion | 30 |
| | Hydrocarbon chain surfactant | Poloxamer 407 | 0.1 |
| | | Sodium dodecylbenzene sulfonate | 0.1 |

| | | | |
|---|---|---|---|
| Note: the Tg of water-based acrylate emulsion was -10°C. | | | |

### Comparative example 6

Polyamide particle was used as a powder material, the first liquid material of Example 5 was used as a formulation of a first liquid material of a spray liquid, and a formulation of a second liquid material was as follows:

| | | | |
|---|---|---|---|
| Second liquid material | Initiator | Azobisisobutylamidine hydrochloride | 5 |
| | Co-solvent | Butanediol | 2 |
| | Water | Water | 45.8 |
| | Powder release agent | Polyoxyethylene ester of fluorine-containing carboxylic acid | 2 |
| | Stripping agent | Water-based acrylate emulsion B | 45 |
| | Hydrocarbon chain surfactant | Poloxamer 407 | 0.1 |
| | | Sodium dodecylbenzene sulfonate | 0.1 |

| | | | |
|---|---|---|---|
| Note: the Tg of water-based acrylate emulsion B was 90°C. | | | |

### Comparative example 7

Polyamide particle was used as a powder material, the first liquid material of Example 5 was used as a formulation of a first liquid material of a spray liquid, and a formulation of a second liquid material was as follows:

| | | | |
|---|---|---|---|
| Second liquid material | Initiator | Azobisisobutylamidine hydrochloride | 10 |
| | Co-solvent | Butanediol | 20 |
| | Water | Water | 67.8 |
| | Powder release agent | Polyoxyethylene ester of fluorine-containing carboxylic acid | 2 |
| | Hydrocarbon chain surfactant | Poloxamer 407 | 0.1 |
| | | Sodium dodecylbenzene sulfonate | 0.1 |

### Comparative example 8

The three-dimensional printing material in Example 5 was used in combination with the three-dimensional object printing method in FIG. 2. The preheating temperature was 175°C. The heating temperature was 180°C. In the inkjet printing process, four droplets of ink were used for printing in a single voxel Vᵥₒₓₑₗ, and the volumes of respective ink droplets were basically the same. The first ratio was 1:1, indicating that two droplets of the first liquid material and two droplets of the second liquid material were sprayed in a single voxel of the molding area, respectively. The second ratio was 1:1, indicating that two droplets of the first liquid material and two droplets of the second liquid material were sprayed in a single voxel of the non-molding area, respectively.

### Comparative example 9

The three-dimensional printing material in Example 5 was used in combination with the three-dimensional object printing method in FIG. 2. The preheating temperature was 175°C. The heating temperature was 180°C. In the inkjet printing process, twelve droplets of ink were used for printing in a single voxel Vᵥₒₓₑₗ of the molding area, eight droplets of ink were used for printing in a single voxel Vᵥₒₓₑₗ of the non-molding area, and the volumes of respective ink droplets were basically the same. The first ratio was 11: 1, indicating that eleven droplets of the first liquid material and one droplet of the second liquid material were sprayed in a single voxel of the molding area, respectively. The second ratio was 3:5, indicating that three droplets of the first liquid material and five droplets of the second liquid material were sprayed in a single voxel of the non-molding area, respectively.

### Comparative example 10

The three-dimensional printing material in Example 5 was used in combination with the three-dimensional object printing method in FIG. 2. The preheating temperature was 175°C. The heating temperature was 180°C. In the inkjet printing process, eight droplets of ink were used for printing in a single voxel Vᵥₒₓₑₗ of the molding area, four droplets of ink were used for printing in a single voxel Vᵥₒₓₑₗ of the non-molding area, and the volumes of respective ink droplets were basically the same. The first ratio was 4:4, indicating that four droplets of the first liquid material and four droplets of the second liquid material were sprayed in a single voxel of the molding area, respectively. The second ratio was 1:3, indicating that one droplet of the first liquid material and three droplets of the second liquid material were sprayed in a single voxel of the non-molding area, respectively.

### Performance test

### 1. Performance test of the first liquid material

The first liquid materials prepared in Examples 1 to 8 and the liquid material prepared in Comparative Example 1 were baked in an oven at room temperature 25°C and 70°C, respectively, and the test results were shown in Table 1.

**Table 1. Storage Stability Test of First Liquid Material**

| Sample pieces | Example 1 | Example 2 | Example 3 | Example 4 | Example 5 | Example 6 | Example 7 | Example 8 | Comparative Example 1 |
|---|---|---|---|---|---|---|---|---|---|
| Storage time at 25°C | > 90 days | > 90 days | > 90 days | > 90 days | > 90 days | > 90 days | > 90 days | > 90 days | <24 hours |
| Storage time at 70°C | > 7 days | > 7 days | > 7 days | > 7 days | > 7 days | > 7 days | > 7 days | > 7 days | <3 hours |

It can be seen from the test data in Table 1 that no high-temperature initiator was added to the first liquid materials provided in Example 1, Examples 3 to 5, and Example 8, the high-temperature initiators were added to the first liquid materials provided in Example 2, Example 6, and Example 7 respectively, and the low-temperature initiator was added to the first liquid material provided in Comparative Example 1. Based on the experimental test data, it can be seen that when the first liquid material did not contain an initiator, the storage stability of the first liquid material was good. The inclusion of the low-temperature initiator in the first liquid material easily results in poor storage stability of the first liquid material. The inclusion of the high-temperature initiator in the first liquid material did not affect the storage stability of the first liquid material at a temperature for inducting the low-temperature initiator to act. The high-temperature initiators in Example 6 and Example 7 were both different from that of Example 2, and both of them were relatively stable at room temperature, thereby ensuring the storage stability of the first liquid materials.

### 2. Performance test of three-dimensional object

The powder material provided in Example 1 was printed at the preheating temperature of 150°C through the three-dimensional obj ect printing method (at the ratio of the first liquid material to the second liquid material) in FIG. 2 to obtain sample pieces. The powder materials provided in Examples 2 to 4 and Comparative Examples 1 to 3 were printed at the preheating temperature of 110°C through the three-dimensional object printing method in FIG. 2 to obtain sample pieces. The powder materials provided in Examples 5 to 7, Examples 9 to 11, and Comparative Examples 4 to 10 were printed at a preheating temperature of 175°C through the three-dimensional object printing method shown in FIG. 2. The powder material provided in Example 8 were printed at a preheating temperature of 150°C through the three-dimensional object printing method shown in FIG. 2. For Examples 1 to 8, and Comparative Example 3, 5 to 7, according to the three-dimensional object printing method, total volumes of the amount of ink in single voxels of the molding area and the non-molding area were the same. For example, volumes of single ink droplets were basically the same, and thus ink droplets in single voxels of the molding area and the non-molding area were the same in number. A case in which eight droplets of liquid materials were sprayed in a single voxel is taken for example, the volume ratio of the first liquid material to the second liquid material in the molding area is 6:2, and the volume ratio of the first liquid material to the second liquid material in the non-molding area is 2:6. Therefore, sample pieces were printed. For Comparative Example 1, 2, and 4, according to the three-dimensional object printing method, eight droplets of the liquid material were sprayed in a single voxel of the molding area, and thus sample pieces were printed.

### 2.1) Tensile strength test of sample pieces

The tensile strengths of the sample pieces were tested according to GB/T 1040.2-2006 "Plastics-Determination Standard of tensile properties".

### 2.2) Elongation at break test of sample pieces

Tests were performed based on GB/T 1040.2-2006 "Plastics-Determination Standard of tensile properties".

The test results of tensile strength and elongation at break of sample pieces were shown in Table 2.

**Table 2. Tensile Strength and Elongation at Break Test Results of Sample pieces**

| Sample pieces | Tensile strength (MPa) | Elongation at break (%) |
|---|---|---|
| Example 1 | 3.54 | 52 |
| Example 2 | 10.30 | 325 |
| Example 3 | 12.12 | 263 |
| Example 4 | 10.60 | 332 |
| Example 5 | 36.20 | 61 |
| Example 6 | 39.50 | 49 |
| Example 7 | 33.61 | 37 |
| Example 8 | 15.23 | 15 |
| Example 9 | 34.13 | 67 |
| Example 10 | 37.02 | 57 |
| Example 11 | 36.12 | 60 |
| Comparative Example 1 | 9.32 | 306 |
| Comparative Example 2 | 1.83 | 56 |
| Comparative Example 3 | 10.26 | 331 |
| Comparative Example 4 | 7.89 | 7 |
| Comparative Example 5 | 35.21 | 62 |
| Comparative Example 6 | 37.41 | 44 |
| Comparative Example 7 | 35.61 | 56 |
| Comparative Example 8 | 20.89 | 27 |
| Comparative Example 9 | 17.69 | 17 |
| Comparative Example 10 | 33.67 | 66 |

### 2.3) Dimensional stability and roughness test of sample pieces

The sample pieces had a target length of 70.00 mm, a target width of 10.00 mm, and a target thickness of 3.00 mm. The width, thickness, and length of the sample pieces obtained from the actual printing were measured, and the differences between the measured values and the target values were calculated, where:
△W width = measured width value - target width value;
△D thickness = measured thickness value - target thickness value;
△L length = measured length value - target length value.

A surface roughness tester was used to measure the roughness values of the printed sample pieces.

The results of the dimensional stability and roughness tests of the sample pieces were shown in Table 3.

**Table 3. Dimensional Stability and Roughness Test Results for Sample pieces**

| Sample pieces | ΔW (mm) | ΔD (mm) | ΔL (mm) | Roughness value (um) |
|---|---|---|---|---|
| Example 1 | -0.16 | 0.10 | -0.29 | 60 |
| Example 2 | -0.05 | -0.12 | -0.10 | 86 |
| Example 3 | 0.05 | -0.03 | -0.61 | 74 |
| Example 4 | 0.03 | 0.13 | -0.24 | 71 |
| Example 5 | 0.06 | 0.11 | -0.51 | 26 |
| Example 6 | -0.02 | 0.05 | -0.21 | 34 |
| Example 7 | -0.07 | -0.05 | -0.22 | 37 |
| Example 8 | -0.06 | 0.10 | -0.22 | 41 |
| Example 9 | -0.08 | -0.10 | -0.66 | 25 |
| Example 10 | -0.02 | 0.04 | -0.38 | 30 |
| Example 11 | 0.04 | 0.02 | -0.46 | 27 |
| Comparative Example 1 | -0.31 | 0.51 | -1.32 | 187 |
| Comparative Example 2 | -0.37 | 0.46 | -1.36 | 175 |
| Comparative Example 3 | -0.23 | 0.55 | -1.41 | 121 |
| Comparative Example 4 | -0.67 | 0.60 | -2.06 | 123 |
| Comparative Example 5 | -0.24 | -0.31 | -0.71 | 41 |
| Comparative Example 6 | 0.43 | 0.39 | 1.01 | 351 |
| Comparative Example 7 | -0.15 | -0.11 | -1.37 | 45 |
| Comparative Example 8 | 2.23 | 0.72 | 0.96 | 235 |
| Comparative Example 9 | -0.15 | 0.09 | -0.67 | 44 |
| Comparative Example 10 | 2.31 | 1.01 | 1.21 | 240 |

The same first liquid material was used in the material formulations of Example 2 and Comparative Example 2 in Table 2, and no second liquid material containing the pro-initiator was added to the liquid material provided in Comparative Example 2. Upon testing, it was found that the tensile strength and elongation at break of the sample piece of Example 2 were significantly better than those of the sample piece of Comparative Example 2. This was due to the fact that the second liquid material containing the pro-initiator is needed for the high-temperature initiator in the first liquid material of Example 2 to better initiate the polymerization reaction. While, in Comparative Example 2, no second liquid material containing a pro-initiator was added, and the first liquid material was not effectively polymerized after being mixed with the powder material, so the mechanical properties of the sample piece were poor.

In Example 2, the first liquid material and the second liquid material were applied to the powder material layer, while in Comparative Example 2, no second liquid material was applied. It can be seen from Table 3 that the values of ΔW, ΔD, ΔL and roughness in Comparative Example 2 were larger, indicating that the combined use of the first liquid material and the second liquid material had a significant improvement effect on the dimensional stability and roughness of the three-dimensional object.

The same polyurethane powder and the same first liquid material were used in Example 4 and Comparative Example 3. The weight ratio of the powder release agent in the second liquid material provided in Example 4 was 2%, and the weight ratio of the powder release agent in the second liquid material provided in Comparative Example 3 was 15% (over 10%). It can be seen from Table 3 that the values of ΔW, ΔD, ΔL and roughness of Comparative Example 3 were larger than those in Example 4, indicating that the effect of the powder release agent on the difference between the solid portion and the protective portion was not obvious when the content of the powder release agent exceeded a certain level, so that the effect of the second liquid material was not obvious.

In Table 2, the same first liquid material was used in Example 5 and Comparative Example 4, and the second liquid material of Example 5 contained the initiator, while no second liquid material containing an initiator was added in Comparative Example 4. As a result, the tensile strength and elongation at break of Example 5 were significantly better than those of Comparative Example 4. The values of ΔW, ΔD, ΔL and roughness of the sample piece printed in Comparative Example 4 were larger than those of Example 5, indicating that spraying the first liquid material and the second liquid material containing the initiator on the powder material layer has an effect on the dimensional stability and roughness.

The same first liquid material was used in Example 5 and Comparative Example 5, where the second liquid material provided in Comparative Example 5 did not contain a powder release agent. It can be seen from Table 3 that compared with Comparative Example 4, Comparative Example 5 had a certain improvement effect on the dimensional stability and roughness, but there was still a certain difference compared with Example 5, indicating that adding a proper amount of powder release agent into the second liquid material had an improvement effect on the dimensional stability and roughness of the three-dimensional object.

The same first liquid material was used in Example 5 and Comparative Example 6. The glass transition temperature Tg of the stripping agent (water-based acrylate emulsion) in the second liquid material provided in Comparative Example 6 was 90°C, exceeding 40°C. The glass transition temperature Tg of the stripping agent (water-based acrylate emulsion) in the second liquid material provided in Example 5 was -10°C, being lower than 40°C. △W, △D of the sample piece printed in Comparative Example 6 were positive values, but the roughness was much larger than that of Example 5, which indicates that the stripping agent with a high glass transition temperature, after wrapping particles of the powder material, was easy to adhere to the surface of the sample piece, resulting in a positive error value and a rougher surface. Therefore, the glass transition temperature of the stripping agent in the second liquid material needed to be controlled to be lower than 40°C.

The same first liquid material was used in Example 5 and Comparative Example 7. The second liquid material provided in Comparative Example 7 did not contain a stripping agent. The values of ΔW, ΔD, ΔL and roughness of the sample piece printed in Comparative Example 7 were close to those of Example 5, but were still somewhat different from those of Example 5, indicating that the inclusion of the stripping agent in the second liquid material has a certain improvement effect on the dimensional stability and roughness of the sample piece.

The same powder material and liquid materials, and different printing methods were used in Example 5, 9 to 11, and Comparative Examples 8 to 10.

Both the tensile strength and elongation at break of Comparative Example 8 were much lower than those of Examples 5, 9, 10, and 11, which may be due to the low amount of ink and the low amount of the first liquid material in Comparative Example 8, while the values of △W, △D and ΔL thereof were larger than the target values, and the protective portion and the solid portion in the non-molding area were adhered to each other as a molding layer during the molding process.

Both the tensile strength and elongation at break of Comparative Example 9 were much lower than those of Examples 5, 9, 10, and 11, which may be due to the fact that Comparative Example 9 had too much the first liquid material and too little second liquid material, and there was not enough second liquid material for promoting the polymerization reaction of the first liquid material, resulting in insufficient polymerization of the first liquid material. Therefore, the tensile strength and elongation at break of Comparative Example 9 were too low.

For Comparative Example 10, although the volume ratio of the first liquid to the second liquid in the molding area and the volume ratio of the first liquid to the second liquid in the non-molding area were within the range, the amount (volume) of the second liquid material per unit volume of the molding area is larger than the amount (volume) of the second liquid material per unit volume of the non-molding area. Furthermore, the first liquid material has a greater overall ink volume. Therefore, the values of △W, △D and ΔL were larger than the target values, and the roughness was larger.

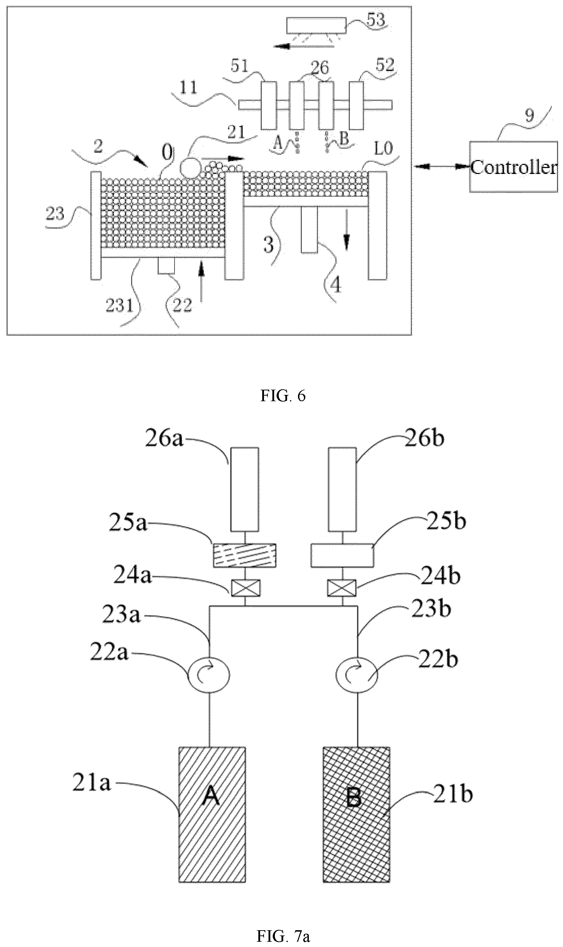

In another aspect, FIG. 6 is a schematic structural diagram of a three-dimensional object printing device according to an embodiment of the present application. As shown in FIG. 6, an embodiment of the present application further provides a three-dimensional object printing device for implementing the above three-dimensional object printing method, including:
a powder supply component 2, supplying a powder material to form a powder material layer L0, where the powder material layer includes a molding area and a non-molding area;
a molding platform 3, supporting the formed powder material layer L0;
a printing head 26, spraying a first liquid material A and a second liquid material B;
a controller 9, controlling the printing head 26 to apply the first liquid material A and the second liquid material B at a first ratio in the molding area of the powder material layer according to layer printing data, where the second liquid material promotes a polymerization reaction of the first liquid material to form a layer solid portion of a three-dimensional object.

The controller 9 controls the printing head 26 to apply the first liquid material A and the second liquid material B at a second ratio in the non-molding area of the powder material layer according to the layer printing data to form a layer protective portion of the three-dimensional object; the first ratio is greater than the second ratio; an amount of the second liquid material B per unit volume of the molding area is less than an amount of the second liquid material B per unit volume of at least a portion of the non-molding area, and an amount of the first liquid material A per unit volume of the molding area is greater than an amount of the first liquid material A per unit volume of at least a portion of the non-molding area.

In this embodiment, the powder supply component 2 includes a powder storage chamber 23, a lifting assembly 22 and a powder spreader 21, where the powder storage chamber is configured to store a powder material 0, and the powder storage chamber 23 is internally provided with a movable support plate 231; the lifting assembly 22 is connected with the support plate 231 and may drive the support plate 231 to rise or fall in Z direction; the powder spreader 21 is configured to spread the powder material L0 in the powder storage chamber 23 onto the molding platform 3 to form a powder material layer L0, and a commonly used powder spreader 21 may be a powder spreading roller or a scraper.

The printing head 26 includes a first nozzle array 26a and a second nozzle array 26b. The first nozzle array 26a is configured to spray the first liquid material A, and the second nozzle array 26b is configured to spray the second liquid material B. Or, the first nozzle array 26a is configured to spray the first liquid material A and the second liquid material B mixed at the first ratio, and the second nozzle array 26b is configured to spray the second liquid material A and the second liquid material B mixed at the second ratio.

In the present application, the first liquid material A and the second liquid material B are two different liquid materials, which are separately stored in different material reservoirs, such as ink cartridges. The first liquid material and the second liquid material are supplied through different liquid material supply pipelines, respectively. The specific components of the first liquid material A and the second liquid material B are described in the aforementioned three-dimensional printing material, which are not repeated here.

In one embodiment, the first liquid material A and the second liquid material B are proportionally sprayed, which may be performed by proportionally mixing the first liquid material A and the second liquid material B, then delivering the first liquid material A and the second liquid material B to respective nozzle arrays of the printing head 26 for spraying, and then spraying the mixed liquid material on the molding area or the non-molding area of the powder material layer.

FIG. 7a is a schematic diagram of a partial structure of a liquid supply device in a three-dimensional object printing device according to an embodiment of the present application. As shown in FIG. 7a, in an embodiment, the first liquid material A is stored in an ink cartridge 21a, and is delivered to a mixing container 25a or 25b by a pump 22a through an ink tube 23a. The second liquid material B is stored in an ink cartridge 21b, and is delivered to a mixing container 25a or 25b by a pump 22b through an ink tube 23b. The first liquid material A and the second liquid material B in the mixing container 25a are mixed at the first ratio, the first liquid material A and the second liquid material B in the mixing container 25b are mixed at the second ratio. Switches 24a and 24b are respectively used to control the first liquid material A and the second liquid material B to supply ink to the mixing container 25a or to supply ink to the mixing container 25b. Types of the switches 24a and 24b are not specifically limited as long as the switches 24a and 24b can control the first liquid material A and the second liquid material B to supply ink to the designated mixing containers. The switches 24a and 24b may be, for example, electromagnetic valves.

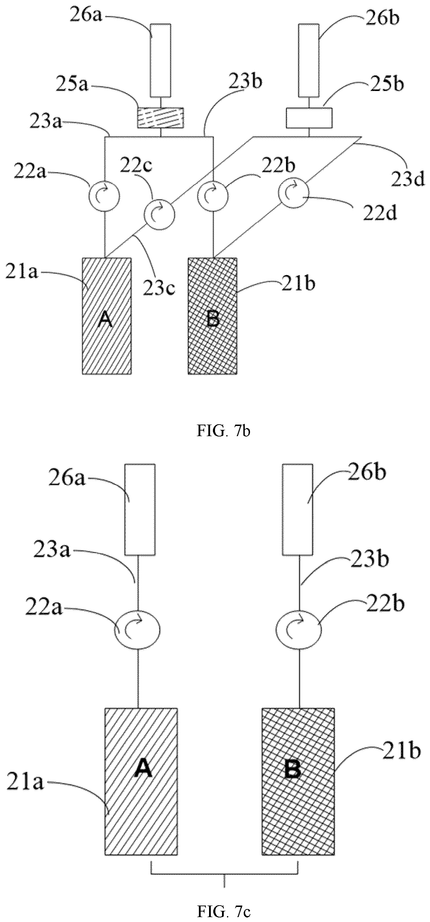

FIG. 7b is a schematic diagram of a partial structure of a liquid supply device in a three-dimensional object printing device according to an embodiment of the present application. As shown in FIG. 7b, in another embodiment, the first liquid material A is stored in the ink cartridge 21a. The first liquid material A is delivered to the mixing container 25a by the pump 22a through the ink tube 23a, and is delivered to the mixing container 25b by the pump 22c through the ink tube 23c. The second liquid material B is stored in the ink cartridge 21b. The second liquid material B is delivered to the mixing container 25a by the pump 22b through the ink tube 23b, and is delivered to the mixing container 25b by the pump 22d through the ink tube 23d. The first liquid material A and the second liquid material B in the mixing container 25a are mixed at the first ratio. The first liquid material A and the second liquid material B in the mixing container 25b are mixed at the second ratio. A mixture of the first liquid material A and the second liquid material B mixed at the first ratio supplies ink to the first nozzle array 26a, and a mixture of the first liquid material A and the second liquid material B mixed at the second ratio supplies ink to the second nozzle array 26b, thereby performing inkjet printing in the molding area and the non-molding area of the powder material layer to obtain the layer solid portion and the layer protective portion of the three-dimensional object.

In embodiments of the present application, the first liquid material A and the second liquid material B are proportionally sprayed, and the first liquid material A and the second liquid material B may supply inks to different nozzle arrays of the printing head through different ink supply pipelines and the liquid materials are sprayed on the powder layer at different ratios.

FIG. 7c is a schematic diagram of a partial structure of a liquid supply device in a three-dimensional object printing device according to an embodiment of the present application. As shown in FIG. 7c, in yet another embodiment, the first liquid material A is stored in the ink cartridge 21a, and is delivered to the first nozzle array 26a of the printing head by the pump 22a through the ink tube 23a. The second liquid material is stored in the ink cartridge 21b, and is delivered to the second nozzle array 26b of the printing head by the pump 22b through the ink tube 23b.

The controller controls the first nozzle array 26a and the second nozzle array 26b of the printing head 26 to spray the first liquid material A and the second liquid material B at the first ratio in the molding area of the powder material layer according to the layer printing data, respectively. The controller controls the first nozzle array 26a and the second nozzle array 26b of the printing head 26 to spray the first liquid material A and the second liquid material B at the second ratio in the non-molding area of the powder material layer according to the layer printing data, respectively. The first liquid material A is in contact with the second liquid material B on the powder material layer.

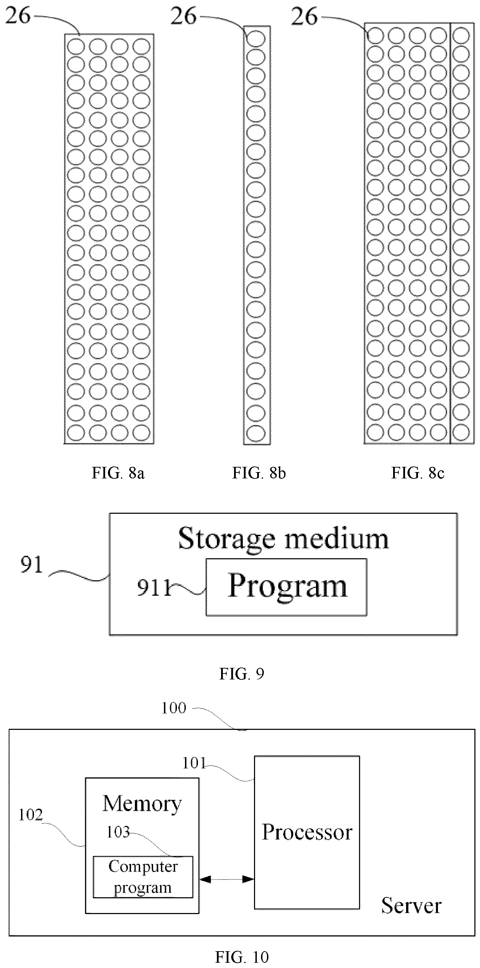

FIG. 8a is a schematic diagram of a surface structure of a nozzle of a printing head in a three-dimensional object printing device according to an embodiment of the present application. As shown in FIG. 8a, the first nozzle array 26a and the second nozzle array 26b may be a multi-channel printing head integrated together or two multi-channel printing heads. The multi-channel printing head 26 includes at least two rows of nozzles, such as two rows, three rows, four rows, etc. In a specific embodiment, the printing head 26 has four rows of nozzles, and each row of nozzles may be independently controlled.

FIG. 8b is a schematic diagram of a surface structure of another nozzle of a printing head according to an embodiment of the present application. As shown in FIG. 8b, the first nozzle array 26a and the second nozzle array 26b may be a single-channel printing head, and the printing head 26 is a single-channel printing head.

FIG. 8c is a schematic diagram of a surface structure of yet another nozzle of a printing head according to an embodiment of the present application. As shown in FIG. 8c, the first nozzle array 26a and the second nozzle array 26b may also be single-channel printing head and a multi-channel printing head which are integrated together. In a particular embodiment, the printing head 26 is an integrated single channel and multi-channel printing head. Each nozzle can be independently controlled, such as whether each nozzle sprays ink or not can be controlled, and/or the size of ink droplets sprayed from each nozzle can be changed.

According to the present application, the first liquid material and the second liquid material are separately stored in different ink cartridges and are delivered through different ink delivery pipelines, so that the storage stability of the liquid materials can be improved, the polymerization reaction of the first liquid material can be prevented, the ink supply smoothness of the liquid materials can be ensured, and meanwhile, the printing head can be prevented from being blocked and damaged.

Optionally, the three-dimensional object printing device further includes a preheating component 53 disposed above the molding platform 3. The preheating component 53 is used to provide radiation energy or heat energy to preheat the powder material layer L0, which is conducive for the second liquid material in the molding area to promote the polymerization reaction of the first liquid material to form a polymer, and is conducive to the vaporization of vaporizable components of the second liquid material in the non-molding area to take away the temperature of the powder material in the non-molding area. The preheating component may be selected from at least one of an ultraviolet lamp, an infrared lamp, a microwave emitter, a heating wire, a heating sheet and a heating plate, and the specific selection is not limited herein.

Optionally, the three-dimensional object printing device further includes heating components 51 and 52 for heating the powder layer on which the second liquid material is sprayed after the second liquid material is sprayed by the printing head. The heating component may be selected from at least one of an ultraviolet lamp, an infrared lamp, a microwave emitter, a heating wire, a heating sheet and a heating plate. It should be noted that the specific type of the heating component is related to the types of the first active component in the first liquid material, or is related to the types of the first active component and the second auxiliary agent. If the first active component in the first liquid material undergoes a photo-polymerization reaction, the heating component provides radiation energy such as ultraviolet radiation, and the first active component is initiated to undergo the photo-polymerization reaction through ultraviolet radiation. If the first active component in the first liquid material undergoes a thermal polymerization reaction, the heating component provides heat energy, which may be for example an infrared lamp, a microwave, a heating wire, a heating sheet or a heating plate, and the first active component in the first liquid material is initiated to undergo the thermal polymerization reaction through thermal energy.

Optionally, the three-dimensional object printing device further includes a lifting mechanism 4, and the lifting mechanism 4 is connected with the molding platform 3 and drives the molding platform 3 to up or down in a vertical direction. During the printing process, the lifting mechanism 4 drives the molding platform 3 to move downwards by a distance of a powder layer thickness after each slice layer containing the layer solid portion and the layer protective portion of the three-dimensional object is formed.

In this embodiment, the preheating component 53 is installed above the molding platform 3, and may be mounted at the top of a molding chamber. The heating component 51, the printing head 26 and the heating component 52 may be sequentially mounted on a guide rail 11 and may be movable on the guide rail 11.

The three-dimensional object printing device may further include a temperature monitor (not shown) for monitoring the temperature of the powder material layer.

Further, the controller 9 is configured to control the operation of at least one of the powder supplying component 2, the preheating component 53, the heating components 51 and 52, and the temperature monitor. For example, the temperature monitor feeds a monitored temperature back to the controller 9, and the controller controls the size of energy provided by the preheating component 53 and/or the heating component 51 and the heating component 52 according to the information fed back by the temperature monitor.

An embodiment of the present application further provides a non-transitory computer readable storage medium. As shown in FIG. 9, the storage medium 91 includes a stored program 911 for controlling a device on which the storage medium 91 is located to execute the above three-dimensional object printing method when the program runs.

An embodiment of the present application further provides a computer device. As shown in FIG. 10, the computer device of this embodiment includes a processor 101, a memory 102, and a computer program 103 stored in the memory 102 and executable on the processor 101. When the processor 101 executes the computer program 103, the three-dimensional object printing method of the embodiments is implemented, which will not be described here, so as to avoid repetition.

The computer device 100 may be a desktop computer, a notebook computer, a palm computer, a cloud server and other computing devices. The computer device may include, but is not limited to, a processor and a memory. It can be understood by those skilled in the art that the computer device may include more or less components than those shown in the figures, or may be in combination with some components or different components. For example, the computer device may also include input and output devices, a network access device, a bus, etc.

The processor may be a central processing unit (Central Processing Unit, CPU), or other general-purpose processor, a digital signal processor (Digital Signal Processor, DSP), an application specific integrated circuit (Application Specific Integrated Circuit ASIC), a field-programmable gate array (Field-Programmable Gate Array, FPGA) or other programmable logic device, a discrete gate or a transistor logic device, a discrete hardware component, etc. The general-purpose processor may be a microprocessor or the processor may be any conventional processor or the like.

The memory may be an internal storage unit of the computer device, such as a hard disk or a memory of the computer device. The memory may also be an external storage device of the computer device, such as a plug-in hard disk, a smart media card (Smart Media Card, SMC), a secure digital (Secure Digital, SD) card, a flash card (Flash Card), etc., which are provided in the computer device. Further, the memory may also include both the internal storage unit and the external storage device of the computer device. The memory is used to store a computer program and other programs and data needed for the computer device. The memory may also be used to temporarily store data that has been output or will be output.

The above are only the preferred embodiments of the present application, and are not intended to limit the present application. Any modifications, equivalent substitutions, improvements, etc. made within the spirit and principle of the present application should be included in the scope of protection of the present application.

## Claims

1. A three-dimensional object printing method, comprising:
forming a powder material layer by using a powder material, wherein the powder material layer comprises a molding area and a non-molding area;
applying a first liquid material and a second liquid material at a first ratio in the molding area of the powder material layer according to layer printing data, wherein the second liquid material promotes a polymerization reaction of the first liquid material to form a layer solid portion of a three-dimensional object; and
applying the first liquid material and the second liquid material at a second ratio in the non-molding area of the powder material layer according to the layer printing data to form a layer protective portion of the three-dimensional object, wherein the first ratio is greater than the second ratio; an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

2. The printing method according to claim 1, wherein the first ratio is a volume ratio of the first liquid material to the second liquid material, and the first ratio is (1-10): 1; and/or the second ratio is a volume ratio of the first liquid material to the second liquid material, and the second ratio is (0-0.95): 1.

3. The printing method according to claim 1, wherein the layer solid portion and the layer protective portion are located in a same horizontal plane, and the layer solid portion and the layer protective portion are disposed adjacent to each other.

4. The printing method according to claim 1, wherein the amount of the second liquid material per unit volume of the non-molding area gradually decreases in a direction of the non-molding area away from the molding area.

5. The printing method according to claim 1, wherein a width of the layer protective portion is greater than or equal to a minimum diameter of droplets of the applied liquid materials.

6. The printing method according to claim 1, wherein before spraying the first liquid material and the second liquid material at the first ratio in the molding area of the powder material layer according to the layer printing data and spraying the first liquid material and the second liquid material at the second ratio in the non-molding area of the powder material layer according to the layer printing data, the three-dimensional object printing method further comprises:
preheating the powder material layer.

7. The printing method according to claim 6, wherein a temperature of the preheating is lower than a melting point or a melting temperature of the powder material by 5°C to 100°C .

8. The printing method according to claim 6, wherein after applying the first liquid material and the second liquid material at the second ratio in the non-molding area of the powder material layer according to the layer printing data, the three-dimensional object printing method further comprises:
heating the powder material layer to which the second liquid material is applied.

9. The printing method according to claim 8, wherein a temperature of the heating is higher than 70°C and lower than a melting point or a melting temperature of the powder material by 5°C or more, so as to promote evaporation of water from the second liquid material, and/or to promote dissolution of the powder material by the first liquid material and to promote the polymerization reaction of the first liquid material.

10. The printing method according to claim 8, wherein an energy for the preheating and the heating comprises at least one of radiant energy and thermal energy.

11. The printing method according to claim 1, wherein the first liquid material comprises a first active component that dissolves at least a portion of the powder material; the second liquid material comprises a second auxiliary agent, a powder release agent, a stripping agent, a hydrocarbon chain surfactant and water, and the second auxiliary agent is used for promoting the polymerization reaction of the first liquid material.

12. The printing method according to claim 11, wherein based on a total weight of the second liquid material being 100%, the second liquid material comprises the following components in percentage by weight: 0.1% to 40% of the second auxiliary agent, 30% to 90% of water, 0.01% to 10% of the powder release agent, 1% to 30% of the stripping agent, and 0.1% to 10% of the hydrocarbon chain surfactant.

13. The printing method according to claim 11 or claim 12, wherein at least one of the following characteristics is satisfied:
(1) the second auxiliary agent is selected from at least one of an initiator, a pro-initiator and a catalyst;
(2) the powder release agent is selected from at least one of a silicon-containing water-soluble release agent, a silicon-containing water-dispersible release agent, a fluorine-containing water-soluble release agent and a fluorine-containing water-dispersible release agent;
(3) the powder release agent is selected from at least one of silicone oil emulsion, fluorine-containing nonionic surfactant and fluorine-containing anionic surfactant;
(4) the stripping agent is selected from a water-soluble polymer and/or a water-dispersible polymer having a glass transition temperature lower than 40°C;
(5) the stripping agent is selected from at least one of polyether resin, polyester resin, poly(methyl)acrylate resin and polyurethane resin with a glass transition temperature lower than 40°C.

14. The printing method according to claim 12, wherein the second liquid material further comprises the following components in percentage by weight: 0.05% to 30% of a co-solvent.

15. The printing method according to claim 14, wherein the co-solvent is selected from at least one of alcohol, alcohol ether, amide, pyrrolidone, organic acid and organic salt.

16. The printing method according to claim 1, wherein after forming the layer solid portion and the layer protective portion of the three-dimensional object, the method further comprises:
repeatedly forming the powder material layer and applying the first liquid material and the second liquid material, so as to obtain a plurality of slice layers which are stacked layer-by-layer to form the three-dimensional object, wherein the slice layers comprise the layer solid portion and the layer protective portion.

17. A non-transitory computer-readable storage medium, comprising a stored program, and when the program is executed, a device in which the storage medium is located is controlled to implement the three-dimensional object printing method according to any one of claims 1 to 16.

18. A computer device, comprising a memory, a processor, and a computer program stored in the memory and executable on the processor, wherein the three-dimensional object printing method according to any one of claims 1 to 16 is implemented when the processor executes the computer program.

19. A three-dimensional object, wherein the three-dimensional object is obtained by printing using the three-dimensional object printing method according to any one of claims 1 to 16.

20. A three-dimensional printing material used with a powder material for three-dimensional printing, comprising:
a first liquid material, comprising a first active component, wherein the first active component dissolves at least a portion of the powder material;
a second liquid material, wherein based on a total weight of the second liquid material being 100%, the second liquid material comprises the following components in percentage by weight: 0.1% to 40% of a second auxiliary agent, 30% to 90% of water, 0.01% to 10% of a powder release agent, 1% to 30% of a stripping agent, and 0.1% to 10% of a hydrocarbon chain surfactant; wherein the second auxiliary agent is used for promoting a polymerization reaction of the first liquid material.

21. A three-dimensional printing material, comprising:
a powder material, for forming a powder material layer;
a first liquid material, comprising a first active component, wherein the first active component dissolves at least a portion of the powder material;
a second liquid material, wherein based on a total weight of the second liquid material being 100%, the second liquid material comprises the following components in percentage by weight: 0.1% to 40% of a second auxiliary agent, 30% to 90% of water, 0.01% to 10% of a powder release agent, 1% to 30% of a stripping agent, and 0.1% to 10% of a hydrocarbon chain surfactant; wherein the second liquid material is used for promoting a polymerization reaction of the first liquid material.

22. The three-dimensional printing material according to claim 21, wherein the powder material layer comprises a molding area and a non-molding area, the first liquid material and the second liquid material are applied to the molding area at a first ratio, the first liquid material and the second liquid material are applied to the non-molding area at a second ratio, and the first ratio is greater than the second ratio.

23. The three-dimensional printing material according to claim 22, wherein the first ratio is a volume ratio of the first liquid material to the second liquid material, and the first ratio is (1-10): 1; and/or the second ratio is a volume ratio of the first liquid material to the second liquid material, and the second ratio is (0-0.95): 1.

24. The three-dimensional printing material according to claim 22, wherein an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

25. The three-dimensional printing material according to claim 21, wherein the powder material comprises at least one of polystyrene, polyvinyl chloride, polyacrylonitrile, acrylonitrile-styrene-acrylate copolymer, polyamide, polyester, polyurethane, poly(meth)acrylate, polyvinyl fluoride, chlorinated polyolefin, block and/or graft copolymer containing soluble by the first active component, polyvinyl alcohol containing hydroxyl group, cellulose, and modified cellulose.

26. The three-dimensional printing material according to claim 20 or claim 21, wherein the first active component has an active group capable of participating in the polymerization reaction, and the active group comprises at least one of a carbon-carbon double bond, a hydroxyl group, a carboxyl group, a heterocyclic propane group, a carbonate group, an epoxy group, a liquid cyclic lactone structure, and a cyclic acetal structure.

27. The three-dimensional printing material according to claim 20 or claim 21, wherein the first liquid material comprises a second active component having an active group capable of participating in the polymerization reaction, and the second active component does not dissolve the powder material;
the second active component comprises at least one of isobornyl acrylate, isobornyl methacrylate, lauryl acrylate, lauryl methacrylate, cyclotrimethylolpropane methylal acrylate, a prepolymer containing a carbon-carbon double bond, a prepolymer containing an epoxy group, a monomer promoting ring-opening polymerization reaction of an epoxy group, a prepolymer promoting ring-opening polymerization reaction of an epoxy group, a solid cyclic lactone, and a cyclic amide compound.

28. The three-dimensional printing material according to claim 20 or claim 21, wherein based on a total weight of the first liquid material being 100%, a weight ratio of the first active component in the first liquid material is 10% to 95%.

29. The three-dimensional printing material according to claim 27, wherein based on a total weight of the first liquid material being 100%, a weight ratio of the second active component in the first liquid material is 5% to 90%.

30. The three-dimensional printing material according to claim 20 or claim 21, wherein based on a total weight of the first liquid material being 100%, the first liquid material further comprises the following components in percentage by weight: 0.01% to 30% of a first auxiliary agent; and
the first auxiliary agent comprises at least one of a high-temperature initiator, a flatting agent, a defoamer, a polymerization inhibitor, an antioxidant, a plasticizer, a dispersant, a pigment, and a dye.

31. The three-dimensional printing material according to claim 20 or claim 21, wherein at least one of the following characteristics is satisfied:
(1) the second auxiliary agent is selected from at least one of an initiator, a pro-initiator and a catalyst;
(2) the powder release agent is selected from at least one of a silicon-containing water-soluble release agent, a silicon-containing water-dispersible release agent, a fluorine-containing water-soluble release agent and a fluorine-containing water-dispersible release agent;
(3) the powder release agent is selected from at least one of silicone oil emulsion, fluorine-containing nonionic surfactant and fluorine-containing anionic surfactant;
(4) the stripping agent is selected from a water-soluble polymer and/or a water-dispersible polymer having a glass transition temperature lower than 40°C;
(5) the stripping agent is selected from at least one of polyether resin, polyester resin, poly(methyl)acrylate resin and polyurethane resin with a glass transition temperature lower than 40°C.

32. The three-dimensional printing material according to claim 20 or claim 21, wherein based on a total weight of the second liquid material being 100%, the second liquid material further comprises the following components in percentage by weight: 0.05% to 30% of a co-solvent.

33. The three-dimensional printing material according to claim 32, wherein the co-solvent is selected from at least one of alcohol, alcohol ether, amide, pyrrolidone, organic acid and organic salt.

34. The three-dimensional printing material according to claim 20 or claim 21, wherein the hydrocarbon chain surfactant is selected from one or more of fatty alcohol polyoxyethylene ether, sodium alkyl sulfonate, sodium alkyl benzene sulfonate, sodium alkyl sulfate, sodium alkyl succinate sulfonate, sodium sulfamate, polyether, and polyoxyethylene polyoxypropylene ether block copolymer.

35. A three-dimensional object printing device, comprising:
a powder supply component, configured to supply a powder material to form a powder material layer, wherein the powder material layer comprises a molding area and a non-molding area;
a molding platform, configured to support the powder material layer;
a printing head and a controller, wherein the controller controls the printing head to apply a first liquid material and a second liquid material at a first ratio in the molding area of the powder material layer according to layer printing data, and the second liquid material promotes a polymerization reaction of the first liquid material to form a layer solid portion of a three-dimensional object;
wherein the controller controls the printing head to apply the first liquid material and the second liquid material at a second ratio in the non-molding area of the powder material layer according to the layer printing data to form a layer protective portion of the three-dimensional object; the first ratio is greater than the second ratio; an amount of the second liquid material per unit volume of the molding area is less than an amount of the second liquid material per unit volume of at least a portion of the non-molding area, and an amount of the first liquid material per unit volume of the molding area is greater than an amount of the first liquid material per unit volume of at least a portion of the non-molding area.

36. The three-dimensional object printing device according to claim 35, wherein the printing head comprises a first nozzle array and a second nozzle array, wherein the first nozzle array is configured to spray the first liquid material and the second liquid material at the first ratio, and the second nozzle array is configured to spray the first liquid material and the second liquid material at the second ratio.

37. The three-dimensional object printing device according to claim 35, wherein the printing head comprises a first nozzle array and a second nozzle array, wherein the first nozzle array and the second nozzle array are configured to respectively spray the first liquid material and the second liquid material at the first ratio in the molding area, and to respectively spray the first liquid material and the second liquid material at the second ratio in the non-molding area.

38. The three-dimensional object printing device according to claim 35, further comprising a lifting mechanism, wherein the lifting mechanism drives the molding platform to move downwards by a distance of a powder layer thickness after each slice layer containing the solid layer part and the protective layer of the three-dimensional object is formed.

39. The three-dimensional object printing device according to claim 35, further comprising a preheating component, wherein the preheating component is disposed above the molding platform and is configured to preheat the powder material layer.

40. The three-dimensional object printing device according to claim 35, further comprising a heating component, wherein the heating component is disposed above the molding platform, and is configured to heat the powder material layer on which the second liquid material is sprayed.
